# EUROPEAN PATENT APPLICATION

(11) **EP 4 477 429 A1**
(43) Date of publication of application: **18.12.2024**
(21) Application number: 24169001.5
(22) Date of filing: 08.04.2024
(51) Int. Cl.: B44C 5/04, B32B 37/00, B32B 37/10, B32B 37/15, B32B 37/20, B32B 38/00, B32B 38/06, E04F 15/02

(54) **METHOD FOR MANUFACTURING A DECORATIVE PANEL AND DECORATIVE PANEL OBTAINED THEREBY**

(30) Priority: 12.06.2023 US 202363507475 P; 19.07.2023 US 202363514380 P
(71) Applicant: Unilin, BV, 8710 Wielsbeke (BE)
(72) Inventor: NAEYAERT, Christophe, 8710 Wielsbeke (BE); DE RICK, Jan, 8710 Wielsbeke (BE); VANDERMEERSCH, Robin, 8710 Wielsbeke (BE); VERHEIRE, Tymen, 8710 Wielsbeke (BE); KRAMÁR, Samuel, 8710 Wielsbeke (BE)
(74) Representative: Unilin Technologies

(57) **Abstract**

Method for manufacturing a decorative panel, comprising at least:
- providing a board material (17) with a substrate (7) and a top layer comprising a printed pattern (8) and a transparent layer (9);
- providing one or more lowered areas (6A) in said board material (17);
- further processing said board material (17) into one or more of said decorative panels (1), wherein at least a portion of said one or more lowered areas (6A) forms a lower edge area (6) at one or both edges (2-3) of a pair of opposite edges of said decorative panels (1);
characterized in that said one or more lowered areas (6A) are provided at least by means of a press (23) having a pressing mold (22), wherein at least one reference edge (19-21) is machined at least to said substrate (7), wherein said reference edge (19-21) is at a predefined distance (D1-D2) from at least one edge of said pair of opposite edges (2-3).

## Description

The present invention relates to a method for manufacturing a decorative panel, and to a decorative panel obtained thereby.

The present invention in particular relates to a method for manufacturing a decorative panel comprising a lower edge area at one or both edges of a pair of opposite edges, for example in the form of a bevel. The decorative panel may have a substrate and an applied thereon top layer comprising at least a printed pattern and a transparent layer applied on said printed pattern. Preferably said printed pattern extends continuously from the global upper surface of the panel towards and on said lower edge area. Said transparent layer may also be provided with excavations for example for the imitation of wood pores

Methods for manufacturing decorative panels having a lowered edge area are known e.g. from WO 2006/066776 and WO 2022/238858. Herein firstly larger slabs, boards or sheets are provided with lowered areas. It may however be troublesome to correctly further process such slabs, boards or sheets after the formation of the lowered areas that correspond to the lowered edge areas. Dividing the larger slabs, boards or sheets into panels having approximately the final dimensions of the decorative panels to be obtained may lead to removal of the entire lowered area, or to lower edge areas that do not show the desired dimensions. Milling profiled edges to the panels may bring similar undesired results. The forming of said lowered areas may require high deformation in the substrate of the slab, board or sheet, with resulting defects.

It is also known e.g. from WO 2022/101743 to provide excavations in the transparent layer with an additional component. Herein said additional component is applied to an upper surface of the transparent layer. However some difficulties may arise when providing said additional component on a slab, sheet or board material being provided with a lowered area, for example such as the lowered areas taught by e.g. WO 2006/066776 and WO 2022/238858.

The present invention in the first place aims at an alternative method for manufacturing decorative panels, wherein, in accordance with preferred embodiments solutions are offered for one or more of the problems with the methods of the state of the art.

With this aim, the present invention, in accordance with its first independent aspect, is a method for manufacturing a decorative panel, wherein said method comprises at least:
- the step of providing a slab, sheet or board material comprising a substrate and an applied thereon top layer comprising at least a printed pattern and a transparent layer applied on said printed pattern;
- the step of providing one or more lowered areas in said slab, sheet or board material;
- the step of further processing, preferably at least dividing, said slab, sheet or board material into one or more of said decorative panels, wherein at least a portion of said one or more lowered areas forms a lower edge area at one or both edges of a pair of opposite edges of said decorative panels;
with as a characteristic that said step of providing one or more lowered areas in said slab, sheet or board material at least comprises a, preferably discontinuous, pressing operation by means of a press having a pressing mold, wherein prior to and/or during and/or subsequent to said pressing operation at least one reference edge is machined at least to said substrate, wherein said reference edge is at a predefined distance from and preferably parallel to at least one edge or to at least one upper edge of said pair of opposite edges. The reference edge may be used in said step of further processing in a way that the lower edge areas have a repeatable and/or predetermined size.

Preferably, said step of providing said slab, sheet or board material comprises firstly providing a material in an endless format and transversally cutting at least said substrate from said material, for example by means of a cutting means, for example by means of a punch, guillotine or flying saw. Preferably said transversally cutting is executed while said material in endless format is fed continuously in its longitudinal direction. Potentially, said material in endless format may be temporarily blocked by the cutting means. The transversal cutting operation may be particularly prone to inaccuracy and/or a lack of squareness. It is in this situation that the present invention in accordance with its first independent aspect is of high interest. The machined reference edges may be used in further processing, rather than the edges created by said transversally cutting.

Preferably, said material in endless format at least comprises said substrate and said top layer.

Preferably, said material in endless format is provided at least by extrusion, and preferably, subsequently providing said top layer on the extruded material, for example by means of thermal lamination of one or more prefabricated sheets, e.g. a printed decorative foil and a transparent foil. Alternatively the printed pattern is provided on said extruded material by directly applying inks on said extruded material, possibly with the intermediate of one or more primer layers, and/or a transparent layer is provided on said printed pattern by liquidly applying a lacquer or polymeric substance.

Preferably, said slab, sheet or board material is provided with at least a first edge that has been straightened by machining. Said first edge may be provided in line with said extrusion. For example a cutting means, such as a knife, may be positioned at a first longitudinal edge and said material in endless format may be fed continuously along and over said cutting means.

Preferably, said at least one straightened edge forms a first reference edge, and is for example used for aligning said slab to said pressing mold. Preferably, said slab, sheet or board material is driven into said press by means of a cart and/or grippers, wherein said slab, sheet or board material is delivered into said press with said first reference edge at a predefined position, for example with an accuracy allowing a tolerance of 0.25 mm or less.

Preferably, said slab, sheet or board material is provided with at least a second edge that has been straightened by machining, wherein said second edge is perpendicular to said first edge. Preferably, said second straightened edge is provided in a device where said first straightened edge is used as a reference. Preferably, said second straightened edge is provided while said slab, sheet or board material is being delivered in said press, while said slab, sheet or board material is in said press, and/or while said slab, sheet or board material is exiting said press. In such case, said second reference edge may be provided sufficiently accurately in perpendicular relationship to said first reference edge.

Preferably, said one or more reference edges are used as a reference in dividing said slab, sheet or board material. Preferably said slab, sheet or board material is divided into panels having approximately the desired dimensions of the decorative panels.

Preferably, said one or more reference edges are used as a reference in said further processing. Preferably, said further processing at least comprises providing, more particularly, milling profiled edges to said pair of opposite edges. Preferably, it concerns profiled edges that are provided with coupling parts allowing to couple two of such decorative panels at the respective edges, such that in a coupled condition a locking is obtained in a direction perpendicular to the plane of coupled panels and/or in a direction in said plane and perpendicular to the respective edges.

Preferably, said method further comprises the step of providing said transparent layer with excavations, wherein this step is preferably at least partially executed separately from, preferably prior to said step of providing said lowered areas in said slab, sheet or board material. During the step of providing said lowered areas in said slab, sheet or board material, the transparent layer can be provided with said excavations, such that the step of providing said lowered areas in said slab, sheet or board material and the step of providing said transparent layer with excavations can be one and the same step.

Preferably, said substrate comprises a filled synthetic composite material comprising at least synthetic material and filler material, wherein preferably the synthetic material is a thermoplastic material, such as polyvinyl chloride and/or polypropylene and/or polyethylene terephthalate and/ or glycol modified polyethylene terephthalate, and the filler material may be calcium carbonate and/or talcum and/or chalk and/or limestone and/or coal. Preferably the weight ratio filler material to synthetic material is at least 2:1, or at least 3:1, or at least 4:1. In the case of polyvinyl chloride being used as said thermoplastic material, or in other cases with another thermoplastic material, the synthetic material composite is preferably free from plasticizer or comprises plasticizers in an amount of 5 phr or less. It is with these composite materials that the present invention in accordance with its first independent aspect is of particular relevance, since such composite material may be particularly prone to dimensional instability and deformations due to changing temperature. An enhanced management of accuracy in manufacturing panels having lower edge areas using the reference edges as provided for in the present independent aspect may alleviate problems associated with such deformations.

It is noted that the present invention also relates to a decorative panel obtained through a method having the characteristics of the first independent aspect and/or the preferred embodiments thereof.

As stated in the context of the first independent aspect, it is preferred to provide said transparent layer with excavations at least partially separately from providing said lowered areas in said slab, sheet or board material. Such order of manufacturing steps is also of importance independently from the use of reference edges. Therefore, the present invention in accordance with its second independent aspect is a method for manufacturing a decorative panel wherein said method comprises:
- the step of providing a slab, sheet or board material comprising a substrate and an applied thereon top layer comprising at least a printed pattern and a transparent layer applied on said printed pattern;
- the step of providing said transparent layer with excavations;
- the step of providing one or more lowered areas in said slab, sheet or board material; wherein said slab, sheet or board material is optionally heated, i.e. pre-heated, before said step of providing said lowered areas to a temperature between 25°C and 110°C;
- the step of further processing, preferably dividing, said slab, sheet or board material into one or more of said decorative panels, wherein at least a portion of said one or more lowered areas forms a lower edge area at one or both edges of a pair of opposite edges of said decorative panels;
wherein
- said step of providing said transparent layer with excavations is at least partially executed separately from, preferably prior to said step of providing said lowered areas in said slab, sheet or board material.

The inventors have surprisingly found that the separate forming of excavations and provision of lowered areas does not necessarily have a negative effect on the obtainable embossing resolution. For example, in the case where the excavations are provided prior to said step of providing said lowered areas, the inventors have noted that the sharpness of the excavations is not suffering or that the excavations are not fading due to subsequent provision of said lowered areas. The separate forming of excavations and provision of lowered areas allows to design a flexible manufacturing process wherein potentially the same slabs, sheets or board materials may be provided with lowered areas or not, upon choice.

Preferably said step of providing said transparent layer with excavations is at least partially performed by an embossing roller, wherein said embossing roller is preferably heated to a temperature within the range of 140 to 180 °C. The inventors found that within this temperature range the structure of said embossing roller is better adopted into said transparent layer. The enhanced flow due to the elevated temperature of the material of the transparent layer, better copies the relief features of the embossing roller, such that also the smallest relief features are well copied into the transparent layer. This has been found to be especially the case for transparent layers that comprise or are based on thermoplastic material, for example that are based on, whether or not plasticized, polyvinyl chloride (PVC). In the case an embossing roller is used to provide said transparent layer with excavations, it is preferred that said slab, sheet or board material is provided in an endless format.

In a preferred embodiment of the present invention, said slab, sheet or board material is pre-heated, for example by radiation and/or convection, or, said slab, sheet or board material comprises residual heat from processing steps, prior to said step of providing one or more lowered areas. Residual heat may for example stem from a processing step prior to said step of providing one or more lowered areas, such as a lamination and/or embossing processing step and the like. The elevated temperature of said slab, sheet or board material enables better thermoplastic deformation. Preferably, said preheating brings the temperature of the slab, sheet or board material, more particularly the surface of said slab, sheet or board material that is provided with said printed pattern and said transparent wear layer to a temperature between 25°C and 110°C. More preferably, the temperature reached with pre-heating is between 55° and 95°C, for example about 60°C or about 80°C.

Said step of providing said one or more lowered areas may be practically realized according to a number of possibilities, of which here below four possibilities are further described, said possibilities not being exhaustive.

According to a first possibility, the step of providing one or more lowered areas is performed with a press, preferably a discontinuous press, and said press is heated preferably to a temperature within the range of 75 to 150°C, or 100 to 150°C. Said press, preferably said discontinuous press, of said first possibility preferably comprises a pressing mold having a mold portion, wherein said mold portion has a global surface preferably comprising at least one protrusion on that portion of the pressing molds surface that contacts said slab, sheet or board material during the press operation, wherein said protrusion corresponds at least to the location of said lowered areas. For example, the pressing mold comprising said mold portion having said one or more protrusions may be at a temperature of 75 to 100°C, for example 85 to 90°C. It is possible that a further pressing mold, with or without a texture, is provided opposite said pressing mold, wherein said further pressing mold is configured for contacting the bottom of said slab, sheet or board material. Preferably, said further pressing mold is at a lower temperature than said pressing mold comprising the mold portion with said one or more protrusions. For example said further pressing mold may be at a temperature of 35 to 60°C, for example about 50°C. Said slab, sheet or board material, more particularly the upper surface thereof, may also be heated before said step of providing said lowered areas, for example by means of radiation and/or convection, more particularly to a temperature within the range of 25 to 110°C, or, preferably, 55°C to 95°C, for example about 60°C or about 80°C. Another possible way of heating said slab, sheet or board material before said step of providing said lowered areas is by closing said press onto said slab, sheet or board material, preferably without exerting pressure to provide said lowered areas, so that said slab, sheet or board material is heated by the heat provided by said press. The inventors found that said closing of said press with the purpose of heating said slab, sheet or board material is preferably held for about 4 to 10 seconds, for example for about 7 seconds. Subsequently pressure may be applied to provide said lowered areas.

As afore stated, said press, preferably said discontinuous press, of said first possibility preferably comprises a pressing mold having a mold portion, wherein said mold portion has a global surface preferably comprising at least one protrusion on that portion of the pressing molds surface that contacts said slab, sheet or board material during the press operation, with the characteristic that said protrusion corresponds at least to the location of said lowered areas. It is even more preferable that said one or more protrusions have a length equal to or greater than the length of said slab, sheet or board material, in the case of lowered areas provided for forming a lower edge area at a longitudinal edge of said decorative panels, and/or width of said slab sheet or board material, in the case of lowered areas provided for forming a lower edge area at a transversal or short edge of said decorative panel, wherein, in such case, the length direction of said slab, sheet or board material preferably coincides with the direction of the longitudinal edges of said decorative panel. The inventors found that a reduction in locally stressed zones in the pressed regions of said slab, sheet or board material could be obtained. Said locally stressed zones presumably result from the shearing action of said protrusion on the slab, sheet or board material and may have negative outcomes on the overall performance of a possible coupling mechanism that may be provided on said decorative panel.

Said one or more protrusions preferably extend from an adjacent portion of said global surface of said mold portion with a height larger than the depth of said lowered areas. It was found by the inventor that said one or more protrusions preferably extend with a height between 2 to 4 mm from an adjacent portion of said global surface, as measured from said global surface to the furthest point of the respective protrusion. Alternatively, said one or more protrusions preferably extend from an adjacent portion of said global surface of said mold portion with a height larger than 35% or even larger than 50% of the thickness of said slab, sheet or board material. The inventors noted, surprisingly, that in such case excavations that were performed prior to the forming of said lowered areas did not become wholly or partially undone. It was further found that, even though some springback, i.e. a decrease of the initially obtained depth, may occur after the formation of said lowered areas, a prominent lower edge area could be obtained at the decorative panel by means of lowered areas formed with protrusions of such extent.

The pressure exerted by said discontinuous press preferably is within the range of 10 to 40 kg/cm².

According to a special embodiment of said first possibility, said excavations can be at least partially formed by said press, preferably a discontinuous press. According to an alternative, said excavations are pre-formed by an embossing roller, wherein the final shape, size or form of said excavations is obtained in said press.

According to a second possibility, said step of providing said lowered areas is performed by means of a press, preferably a discontinuous press, at a temperature within the range of 25°C to 75°C, or of 25°C to 50°C, for example about 30°C to about 40°C. Said press, preferably said discontinuous press, of said first possibility preferably comprises a pressing mold having a mold portion, wherein said mold portion has a global surface preferably comprising at least one protrusion on that portion of the pressing molds surface that contacts said slab, sheet or board material during the press operation, wherein said protrusion corresponds at least to the location of said lowered areas. The pressing mold having the mold portion with the one more protrusions preferably forms an upper embossing plate and may be heated in the same range as a potential further pressing mold, with or without a texture, provided opposite said pressing mold and configured for contacting the bottom of said slab, sheet or board material. Both pressing molds may for example be heated in a range of 25°C to 50°C, for example about 30°C to about 40°C. Said slab, sheet or board material is then preferably heated to a temperature within the range of 60 to 110°C, or 95°C to 110°C. The heating of said slab, sheet or board material can be performed according to the means described in the first possibility of providing said one or more lowered areas and/or by means of radiation and/or convection. One problem that may occur is that, when a decorative panel that is provided with said lowered areas by means of a pressing operation wherein the processing parameters such as press temperature and substrate temperature are chosen incorrectly, said lowered areas tend to spring back at least partially when exposed to temperatures exceeding 30°C for an extended period of time. By providing said one or more lowered areas in said heated slab, sheet or board material by means of a press with a temperature within the range of 25 to 75°C, preferably around 60°C or even lower, from about 30°C to about 40°C, the inventors found that said lowered areas better retain their depth when exposed to temperatures exceeding 30°C in use for an extended period of time. It is assumed that the preheating of the slab, sheet or board material in a range of 60°C to 110°C, or of 95°C to 110°C brings the slab, sheet or board material in a plastic state. The press treatment at a lower temperature fixes the slab, sheet or board material in the desired deformed condition. The inventors have noted that lowered areas formed in this manner have a lower tendency for springback in use even at elevated temperatures. Also potential defects due to the deformation of the slab, sheet or board material, such as locally stressed zones may be less severe under these circumstances. Due to the colder press treatment, the pressed slabs, sheets or board materials are easier to handle after pressing.

The temperature of the press in accordance with said first and second possibility is, in the case of a discontinuous press, preferably defined by the temperature of the upper embossing plate or pressing mold in said discontinuous press, i.e. the upper embossing plate or pressing mold forming said mold portion having said one or more protrusions. The discontinuous press may comprise a lower embossing plate for contacting the bottom surface of said slab, sheet or board, which may or may not have a structured surface. In the context of said first and second possibility, the temperature of the upper and lower embossing plates may be equal or about equal. This temperature then corresponds to the temperature of the press as referred to in said first and second possibility. Alternatively, the temperature of the upper and lower embossing plates may be different. The temperature of the embossing plate or pressing mold having the mold portion with the one or more protrusions then corresponds to the temperature of the press as referred to in said first and second possibility. In the case of a continuous press, the temperature of the press is defined by the embossing element, for example an embossing roller or belt, having the one or more protrusions.

It is noted that any structure on the lower embossing plate, or on the pressing mold opposite the pressing mold having the mold portion with the one or more protrusions, preferably has protrusions, if any, with a height that is everywhere smaller than the maximum height of the protrusions on the upper embossing plate. Preferably the protrusions on the lower embossing plate have a height that is everywhere smaller than 25% of the maximum height of the protrusions on the upper embossing plate. The protrusions on the lower embossing plate may provide a functional or decorative relief to the bottom of said slab, sheet or board material. For example, such protrusions may provide a relief with anti-skid properties, or a relief enhancing adhesion by means of glue of for example a backing layer.

According to a variant of said first and second possibility, said slab, sheet or board material is heated by means of an infrared heater before said step of providing said lowered areas to a preheated temperature between 50°C and 90°C, preferably about 80°C. The embossing plates of a discontinuous press, i.e. an upper embossing plate or pressing mold forming said mold portion having said one or more protrusions and a lower embossing plate for contacting the bottom surface of said slab, sheet or board, may be at mutually different temperatures. According to a first example the upper press plate temperature is higher than the lower press plate temperature. For example the upper press plate temperature may be above 100°C, for example about 120°C, while the lower press plate temperature may be below 120°C, for example about 100°C. According to a second and particularly preferred possibility, the upper press plate temperature is lower than the lower press plate temperature. For example, the upper and lower press plate may respectively be at an upper press plate temperature of below 100°C, or even below 80°C, or below 60°C and a lower press plate temperature is above 60°C, or even above 80°C, or at about 100°C. A particularly preferred upper press plate temperature is about 50°C, while the lower press plate temperature is about 100°C.

In said first and second possibility, as well as in the variant, the maximum pressure exerted by said discontinuous press preferably is built up quickly, for example in a time period of 10 seconds or less, preferably 5 seconds or less. As afore stated the maximum pressure may be within the range of 10 to 40 kg/cm². The maximum pressure may be maintained during 2 to 10 seconds, for example for about 5 seconds. The inventors have found that maintaining the maximum pressure for a time period of 2 to 7 seconds, and then lowering the pressure to maintain the lowered pressure value, for example half the maximum pressure or less, for a time period of 2 to 7 seconds, yielded the best results, in particular when said variant of the first and second possibility was practiced. The ideal settings used a preheating to 80°C, an upper embossing plate temperature of 50°C, a lower embossing plate temperature of 100°C, a maximum pressure of 35 kg/cm² during 5 seconds, and a lowered pressure in a subsequent pressing stage of 10 kg/cm² during 5 seconds, after which the pressure was entirely released and the slab, sheet or board removed from the discontinuous press. The build-up time to the maximum pressure was less than 5 seconds, or even 2 seconds or less.

It is noted that heating said slab, sheet or board material before said step of providing said lowered areas may result in an enhanced repeatability of the provision of said lowered areas. When the temperature of each slab, sheet or board material is recorded and/or equal upon providing the lowered areas, the position of the lowered areas in the slab, sheet or board material is known and/or constant. A subsequent step or substep of finishing comprising converting said slab, sheet or board material into a decorative panel may be executed more accurately with a diminished chance of inadvertently removing the lowered areas or portions thereof. This temperature management of the slab, sheet or board material upon provision of said lowered areas is particularly useful in combination with the reference edge mentioned in the context of the first aspect. The temperature management aids in defining the distance of said reference edge from said at least one upper edge of said pair of opposite edges. This distance is set and known at the preheating temperature since it is defined by the mold portion or embossing element, for example the upper embossing plate, in the press. Using the thermal expansion behavior of the slab, sheet or board material, the distance at another temperature can be accurately calculated and taken into account in said step of finishing.

In said first, as well as in said second possibility, said one or more protrusions that provide said lowered areas preferably show one or more of the following properties:
- the property that said one or more protrusions comprise a first flank portion forming the surface of said lower edge area, wherein said first flank portion is curved, preferably concavely curved, and has a radius between 2 and 10 mm;
- the property that said one or more protrusions have a location of maximum height, wherein said location is positioned on a rounded segment having a radius between 0.2 and 1 mm;
- the property that said one or more protrusions have a location of maximum height, wherein said maximum height is between 0.75 and 1.5 mm;
- the property that said one or more protrusions comprises a first flank portion forming the surface of said lower edge area, and a second flank portion opposite the first flank portion, wherein said second flank portion is angled at 110° to 145° with the global surface of the pressing mold;
- the above four properties combined, wherein said one or more protrusions have a cross-section essentially defined by said first flank portion, said rounded segment and said second flank portion.

In said first, as well as in said second possibility, said step of providing one or more lowered areas in said slab, sheet or board material at least comprises a, preferably discontinuous, pressing operation by means of a press. Preferably said press comprises a pressing mold, wherein said pressing mold comprises at least a first protrusion on that portion of the molds surface that contacts said slab, sheet or board material during the press operation, wherein said first protrusion corresponds at least to the location of at least one of said lowered areas, wherein said pressing mold comprises at least a second protrusion extending generally parallel to said first protrusion, wherein said second protrusion contacts said slab, sheet or board material during the press operation and corresponds to a portion of said slab, sheet or board material that is removed in said step of finishing. As further explained in the context of the ninth independent aspect of the present invention, such second protrusion may minimize the occurrence of locally stressed zones of substrate material at the location of the material that is pressed by means of said first protrusion.

In some embodiments of the first and second possibility, in particular in the case where the temperature of the press is lower than the pre-heating temperature of said slab, sheet or board material, it may be of interest to actively cool at least the pressing mold having the mold portion with the one or more protrusions that form said lowered areas. In such case, a gradual heating of the pressing mold by contact with the preheated slab, sheet or board material may be avoided or minimized.

According to a third possibility, the step of providing one or more lowered areas is performed with an embossing roller and said embossing roller is preferably heated for example to a temperature within the range of 130 to 180 °C. It is noted that, in case an embossing roller is used for providing said excavations in said transparent layer, the embossing roller for providing said one or more lowered areas may be an additional embossing roller. In the case that said lowered areas are provided by an embossing roller, it is preferred that said slab, sheet or board material is provided in an endless format.

Said embossing roller comprises a circumference comprising at least one protrusion that corresponds to the location of at least one of said lowered areas.

Said one or more protrusions preferably extend from an adjacent portion of said circumference with a height larger than the depth of said lowered areas. Said depth preferably corresponds to the vertical distance measured from the highest point of the global upper surface of said slab, sheet or board material, to the lowest point of said lowered area provided on said slab, sheet or board material, after said slab, sheet or board material with said provided lowered area is climatized to room temperature and any springback has already occurred. A prominent lower edge area could be obtained at the decorative panel by means of lowered areas formed with protrusions of such extent.

According to a fourth possibility, said excavations are at least partially formed by an embossing roller, wherein said one or more lowered areas are also partially formed by said embossing roller. The embossing roller may pre-form said one or more lowered areas to facilitate a press operation, for example in accordance with said first possibility or an alternative, further in the production process. It is preferred that the pre-forming of said one or more lowered areas by said embossing roller is performed on a slab, sheet or board material that is provided in an endless format.

Said slab, sheet or board material comprises a bottom wherein said bottom preferably comprises the underside of said substrate or the underside of a backing layer. Preferably said bottom comprises one or more excavations.

In the case a backing layer is available, it is preferred that said backing layer comprises a thermoplastic material. Said backing layer could be available for numerous reasons for example, but not limited to dampening purposes, anti-skid, noise reduction and the like.

It is preferred that the method comprises the step of adding said one or more excavations to said bottom and that said step is at least partially performed by an embossing roller or a discontinuous press. Another possibility is that said bottom excavations are at least partially milled and/or sawed. In the case of the above mentioned first possibility, said discontinuous press may be the same or an additional press to the discontinuous press for forming said lowered areas. Said excavations at the bottom may be provided to obtain a decorative panel with reduced weight, or a reduced weight to thickness ratio, in comparison with a decorative panel without said excavations at the bottom.

Said slab, sheet or board material preferably comprises one or more technical regions that are at least partially removed during said step of further processing, i.e. preferably removed in said step of dividing said slab, sheet or board material into one or more decorative panels. Said technical regions are technical in the sense that the material in said region is at least partially absent from said one or more decorative panels, preferably floor panels. It is hence clear that said slab, sheet or board material preferably comprises the material of multiple adjoining decorative panels, wherein a technical region between said decorative panels needs to be, at least partially, removed in said step of further processing.

In a preferred embodiment of the invention, the method comprises the step of providing said one or more technical regions with one or more recesses, wherein said recesses could be present at the underside and/or the top of said slab, sheet or board material. It is preferable that said step of providing said recesses in said one or more technical regions is performed at least partially prior to said step of providing one or more lowered areas in said slab, sheet or board material.

Said recesses in said technical regions may accommodate for the formation of said lowered areas. The inventors have found that during embossing and/or pressing of thermoplastic material, the embossed and/or pressed material is displaced rather than compressed. By providing regions free of material, the embossed/pressed material has room to be displaced into, without building up too much additional stress in other regions of the slab, sheet or board material.

Said recesses in said one or more technical regions are preferably at least partially provided by milling and/or sawing and/or cutting, but can also be at least partially provided by means of embossing and/or pressing. Another possibility is that said recesses in said one or more technical regions are provided by means of extrusion by a die with an adapted slot nozzle opening.

It is noted that providing lowered areas in a slab, sheet or board material in accordance with one or more of the possibilities described in the context of this second aspect, is also of interest independently from the fact whether or not excavations have been formed in said transparent layer with excavations, and whether such potential excavations have been formed separately from and/or prior to said step of providing said lowered areas in said slab, sheet or board material. The steps of preheating and the particular temperature and/or pressure regimes described therein, in particular in said first and second possibility and the variants thereof, bring important advantages, e.g from the point of view of limited springback and less severe locally stressed zones, also when no excavations are practiced, or when these excavations are executed differently than separate and/or prior to the provision of said lowered areas.

As stated in the context of the second possibility for the realization of said lowered areas in the context of the second independent aspect, it is preferred to provide said one or more lowered areas through an embossing roller that is heated. Hot embossing of lowered areas has particular importance independently from the separate formation of excavations. Further temperature management during further processing of said slab, sheet or board material may add to the accuracy of the manufacturing method. It is thus remarked that the present invention in accordance with its third independent aspect is a method for manufacturing a decorative panel, wherein said method comprises
- the step of providing a slab, sheet or board material comprising a substrate and an applied thereon top layer comprising at least a printed pattern and a transparent layer applied on said printed pattern;
- the step of providing one or more lowered areas in said slab, sheet or board material;
- the step of further processing, preferably dividing, said slab, sheet or board material into one or more of said decorative panels, wherein at least a portion of said one or more lowered areas forms a lower edge area at one or both edges of a pair of opposite edges of said decorative panels;
wherein
- said step of providing said one or more lowered areas in said slab, sheet or board material is executed using an embossing roller at a temperature of 130°C or above, preferably less than 200°C, preferably about 170°C, wherein preferably the surface of said slab, sheet or board material has been preheated; and/or
- said slab, sheet or board material is provided in a continuous form, wherein said step of further processing comprises cutting said slab, sheet or board material transversally as the first operation after said step of providing said lowered areas and/or within 10 m from provision of said lowered areas and/or at a temperature of 100°C or more, preferably 200°C or more, e.g. at about 240 to 250°C.

The inventors have found that by using an embossing roller at a temperature of 130°C or above, preferably at a temperature between 130°C to 200°C, to provide said one or more lowered areas in said slab, sheet or board material, the structure of said embossing roller is better adopted into said transparent layer. The enhanced flow of the material of the transparent layer better copies the relief of the embossing roller, such that even the smallest relief features are also well copied.

The inventors also found that a pre-heated slab, sheet or board material results in a minimal residual shrinkage as well as minimal deformation of said lowered areas after said slab, sheet or board material is cooled to room temperature after the step of providing said lowered areas. It is also noted by the inventors that cutting said pre-heated slab sheet or board material results in better relaxation of said slab, sheet or board material which in term leads to less residual shrinkage and/or deformation.

From the above it is clear that the listed characteristics of the third independent aspect do not necessarily need to be combined in a manufacturing method, but using a heated embossing roller and hot cutting of said slab, sheet or board material both have independent technical importance.

Preferably said transparent layer is at least partially coated prior to said step of providing said one or more lowered areas. And preferably said slab, sheet or board material is provided in an endless format.

In a preferred embodiment of the present invention, said embossing roller is used together with a counter pressure roller. Said counter pressure roller preferably comprises a rubber or a synthetic circumferential surface, but may also comprise a steel circumferential surface.

Preferably during said step of providing said one or more lowered areas, said slab, sheet or board material follows the circumference of said embossing roller over an arc shaped section thereof. Herein it is meant that the slab, sheet or board material in feeding direction, and seen in cross-section, initially touches the embossing roller at a first point, then follows the circumference of the embossing roller to a second point where the slab, sheet or board material interrupts the contact with the embossing roller, wherein said arc shaped section of the circumference is defined in between said first and second point. Said arc shaped section preferably encloses an angle that lies within a range of 0° to 90°. It is clear that said angle is defined between the radii of the embossing roller going through said first and second point. Within this range, the inventors found that a sufficiently long contact time between said slab, sheet or board material and said embossing roller may be attained, which may lead to a better formation of said one or more lowered areas.

Preferably said transparent layer comprises excavations and said excavations are at least partially provided by an embossing roller. It is noted that said embossing roller may be the same or an additional embossing roller to the embossing roller mentioned in the context of the above mentioned embossing roller for forming said lowered areas.

Preferably, in the context of any of the first till third aspect, when excavations are provided in said transparent layer, such excavations may be provided with an additional component at least partially filling said excavations. Such additional component may for example be a colorant, a lacquer, an ink or similar. For example the techniques disclosed in WO°2022/101743 may be applied. Preferably, such step of applying an additional component is performed prior to said step of forming said lowered areas, when possible in the context of the respective aspect and/or preferred embodiment thereof. In this manner it can be avoided that the additional component unnecessarily accumulates in said lowered areas.

It is clear that applying said additional component prior to forming said lowered areas per se has inventive merit, and therefore, the present invention in accordance with its fourth independent aspect is a method for manufacturing a decorative panel wherein said method comprises:
- the step of providing a slab, sheet or board material comprising a substrate and an applied thereon top layer comprising at least a printed pattern and a transparent layer applied on said printed pattern, wherein the transparent layer is provided with excavations;
- the step of applying an additional component in a plurality of said excavations;
- the step of providing one or more lowered areas in said slab, sheet or board material;
- the step of further processing, preferably dividing, said slab, sheet or board material into one or more of said decorative panels, wherein at least a portion of said one or more lowered areas forms a lower edge area at one or both edges of a pair of opposite edges of said decorative panels;
wherein
- said step of applying an additional component in a plurality of said excavations is at least partially executed prior to said step of providing said lowered areas in said slab, sheet or board material.

Preferably said printed pattern comprises at least a motif corresponding to at least one decorative panel and preferably corresponding to multiple decorative panels that are situated next to each other on said slab, sheet or board material. The decorative panels preferably extend with their longitudinal pair of opposite edges in the length direction of said slab, sheet or board material, wherein said multiple decorative panels are situated next to each other at least in the transverse direction.

Preferably said method further comprises the step of controlling the amount of additional component that is applied on said slab, sheet or board material. Said step of controlling may be performed by an application device

Said application device preferably comprises a doctor roller and at least one application roller and said amount of additional component that is applied in said slab, sheet or board material may be controlled by varying the distance between said doctor roller and said application roller and/or by varying the rotational speed of said doctor roller and/or said application roller. Preferably said doctor roller and said application roller are touching during application of said additional component and the circumferential surface of said application roller is indented by said doctor roller. Preferably, the circumferential surface of said application roller has a hardness between 5 and 25 shore, preferably around 15 shore and said circumferential surface preferably comprises polyurethane (PU). The inventors found that with said hardness for said circumferential surface a favorable indentation in said circumferential surface, by said doctor roller, can be obtained which results in an optimal regulation of the amount of additional component that is supplied on said slab, sheet or board material.

Preferably, said step of applying an additional component in a plurality of said excavations is at least partially performed by at least a said application device and/or scrapers and/or by means of polishing and/or wiping said upper surface.

Said application device preferably comprises one or more application rollers. In the case the application device comprises a doctor roller and two or more application rollers, the preferred embodiment is as follows: said additional component is fed between a doctor roller and a first application roller, said first application roller then contacts a second application roller, and said additional component is then transferred onto said second application roller. Said second application roller then applies said additional component onto said slab, sheet or board material. The use of at least said second application roller may result in a better control of the overall application process.

Preferably after applying said additional component in a plurality of said excavations, at least some additional component is removed by a removal roller and/or by brushing and/or grinding. For example in the case said additional component is an opacifying agent, removing at least some additional component will better control the final opacifying effect on the end product. Preferably such removal roller comprises a circumferential surface which comprises ethylene propylene diene monomer (EPDM). Said circumferential surface of said removal roller preferably has a hardness between 20 and 80 shore, preferably around 60 shore. The inventors found that with a hardness within this range, an optimal amount of additional component may be removed from said slab, sheet or board material

When said additional component is applied by means of an application device comprising at least one application roller, the regions of said transparent layer that are adjacent to said excavations could also have at least some additional component applied thereon. As explained above, at least some additional component may be removed by a removal roller and/or by brushing and/or grinding. After the step of removal, e.g. by said removal roller, a residual film of additional component may be present on said regions of said transparent layer that are adjacent to said excavations as not all of the additional component may be removed. This residual film may have a thickness in the range of 0 to 50 micrometers, preferably less than 10 micrometers, preferably around 5 micrometers.

Said residual film may have beneficial results in the overall look of said decorative panel. For example, said residual film may lead to a better imitation of natural wood. However it may be that said residual film is undesired.

In a specific embodiment the step of applying said additional component in a plurality of said excavations, said additional component is digitally printed in register with said excavations. For example, said application device can comprise a digital printer. Said application device can be a digital printing engine comprising a plurality of inkjet print heads each having a plurality of nozzles. Preferably the digital printing engine is a single pass printer, wherein the inkjet print heads are at standstill and the slab, sheet or board material is continuously moved under said inkjet print heads while being printed with said additional component. With a digital application of said additional component, the presence of a residual film may be avoided. Herein, the step of controlling the amount of additional component that is applied on said slab, sheet or board material is preferably embedded in the digital data controlling the inkjet print heads. For example, in addition to firing a particular nozzle or not, the resolution of the data, the drop size fired by a particular nozzle of an inkjet head may be varied. Preferably said inkjet print heads are of the "drop-on-demand" type.

Said step of providing said one or more lowered areas may be performed as any of the preferred embodiments of the first till third aspect of the invention, for example may be performed in accordance with any of the first till third possibility mentioned in the second aspect of the invention. Preferably said step of providing said one or more lowered areas is performed by any of the following three possible embodiments.

According to a first possible embodiment, said step of providing one or more lowered areas in said slab, sheet or board material is executed by means of a pressing operation. This pressing operation may be performed by a discontinuous or continuous cold press or a discontinuous or continuous hot press.

Said press preferably comprises a mold portion, wherein said mold portion has a global surface comprising at least one protrusion and wherein said protrusion contacts said slab, sheet or board material during the pressing operation and in that said protrusion corresponds to at least the location of at least one of said lowered areas. It is even more preferable that said one or more protrusions have a length equal to or greater than the length and/or width of said slab sheet or board material.

Said protrusion preferably extends further from an adjacent portion of said global surface of said mold portion than the depth of said lowered areas. The inventors found that by pressing into thermoplastic material, within the context of the current invention, a significant portion of the pressed material tends to spring back. By embossing deeper into the material than the desired depth of the lower edge area in the end product, the desired end result can be attained.

It is noted that this first possible embodiment may further show the features and/or the preferred features of the second possibility mentioned in the second aspect of the invention.

According to a second possible embodiment, said step of providing one or more lowered areas is performed at least partially by means of an embossing roller.

Preferably a counter pressure roller, preferably having a rubber or a synthetic rubber or a steel circumferential surface, is used together with said embossing roller.

Preferably said embossing roller has a circumference comprising at least one protrusion that corresponds to the location of at least one of said lowered areas.

Said protrusion preferably extends from an adjacent portion of said circumference with a height larger than the depth of said lowered areas. The inventors found that by embossing into thermoplastic material a significant portion of the embossed material tends to spring back. By embossing deeper into the material than the desired depth of the lowered area in the end product, the desired end result can be attained.

It is noted that this second possible embodiment may further show the features and/or the preferred features of the first possibility mentioned in the second aspect of the invention.

According to a third possible embodiment, said step of providing one or more lowered areas in said slab, sheet or board material is executed at least by milling said lowered area into said slab, sheet or board material.

Preferably said method, further comprises the step of applying a primer and/or a topcoat over said additional component. Such primer and/or topcoat may be useful for the protection of the surface and improve scratch resistance of the decorative panel to be obtained from said method.

Preferably said method further comprises the step of curing said primer and/or topcoat by means of radiation and/or heat.

Preferably said additional component comprises a lacquer, a paint and the like or a powder and preferably said additional component comprises photo-initiators.

Preferably said additional component is cured by means of UV-radiation. UV curing may lead to a fluent manufacturing process, wherein e.g. the curing stage may be chosen on the basis of subsequent processing steps.

According to another embodiment of the third aspect of the invention, said additional component is at least partially cured by means of radiation preferably prior to said step of providing one or more lowered areas in said slab, sheet or board material. The inventors found that an at least partially cured additional component may lead to an adherence in the lowered areas which is sufficient to avoid contamination of equipment in subsequent operations. Preferably said additional component is only partially cured prior to said step of providing one or more lowered areas. A fully cured additional component is less desired, since it shows almost no deformability and may lead to the formation of cracks in the fully cured additional component applied on the surface of said slab, sheet or board material, during said step of providing one or more lowered areas. This may then lead to undesirable aesthetic effects on the decorative panel. Preferably said slab, sheet or board material is heated at least partially separately from or during said at least partial curing. Such heating may improve the plastic deformability of said material, such that said cracks may be avoided..

According to another embodiment of the third aspect of the invention, the method comprises the step of partially curing the additional component by means of heat. In this case said additional component comprises thermal initiators. Said partial curing of said additional component is performed at least partially prior to the step of providing one or more lowered areas in said slab, sheet or board material and said partially cured additional component is fully cured after the step of providing one or more lowered areas in said slab, sheet or board material. The inventors found that an at least partially cured additional component may lead to an adherence in the lowered areas which is sufficient to avoid contamination of equipment in subsequent operations. A fully cured additional component is less desired, since it shows almost no deformability and may lead to the formation of cracks in the fully cured additional component applied on the surface of said slab, sheet or board material, during said step of providing one or more lowered areas. This may then lead to undesirable aesthetic effects on the decorative panel.

Preferably said step of at least partially curing said additional component by means of heat is realized by a pressing and/or embossing operation.

Generally, in the context of the present invention, it is not excluded to apply an additional component in excavations of the transparent layer, while said slab, sheet or board material has already been provided with lowered areas. The application of said additional component after said lowered areas have been provided may prove beneficial to the prevention of cracks as mentioned in the embodiments described above. In such case, preferably additional measures are taken to limit or prevent accumulation of the additional component in said lowered areas. Such limitation of accumulation is of technical importance as it may lead to a more efficient manufacturing method with less steps.

Therefore, the present invention in accordance with its fifth independent aspect is a method for manufacturing a decorative panel, wherein said method comprises:
- the step of providing a slab, sheet or board material comprising a substrate and an applied thereon top layer comprising at least a printed pattern and a transparent layer applied on said printed pattern, wherein the transparent layer is provided with excavations;
- the step of providing one or more lowered areas in said slab, sheet or board material;
- the step of applying an additional component in a plurality of said excavations;
- the step of further processing, preferably dividing, said slab, sheet or board material into one or more of said decorative panels, wherein at least a portion of said one or more lowered areas forms a lower edge area at one or both edges of a pair of opposite edges of said decorative panels;
wherein
- said step of applying an additional component in a plurality of said excavations is at least partially executed after said step of providing said lowered areas in said slab, sheet or board material, wherein a device is used for applying said additional component, wherein said device applies said additional component in an equal or lesser manner in said lowered area.

When the additional component is applied on a larger slab, sheet or board that is already provided with lowered areas before said step of applying said additional component, these lowered areas tend to be filled up with said additional component, further complicating the dividing operation into panels and increasing the risk of lower edge areas that do not show the desired dimensions. A device that is configured to apply said additional component in an equal or lesser manner in said lowered area may further avoid the use of specifically adapted removal processes in order to equal out or remove said additional component in said lowered areas.

It is clear that the device mentioned in the fifth independent aspect is preferably capable of applying said additional component in an equal or lesser manner at said lowered area per se, i.e. without the need for removal mechanisms of superfluously applied additional component after the application thereof by said device.

Said device may be put to practice in many different ways, of which here below a non-exhaustive list of embodiments therefor are mentioned..

According to a preferred embodiment, said device comprises at least one application roller, wherein said application roller has an outer surface comprising at least one protrusion. The application roller preferably contacts or is in close proximity with the slab, sheet or board material to be provided with said additional component. In such case, it is the application roller itself that directly delivers the additional component to the slab, sheet or board material by means of its active coating surface. According to an alternative, the application roller may deliver the additional component indirectly, e.g. through the intermediate of a transfer roller. Preferably said one or more protrusions extend outward from an adjacent portion of said outer surface over a distance between 0 and 1 mm. The position of said at least one protrusion preferably corresponds to at least the location of one of said lowered areas and/or, when a plurality of protrusions is comprised on said surface, to the location of a plurality of said lowered areas and/or other regions where the application of said additional component is desirable in an equal or lesser manner or is undesirable.

Preferably said device comprises a doctor roller positioned closely to or touching with said application roller. Said doctor roller may be used for controlling the thickness of said additional component. Said doctor roller preferably rotates in a different rotational direction as to create a shearing action, which removes excess additional component from said application roller. The additional component is provided to said application roller in the nip between said doctor roller and said application roller. Preferably, said doctor roller has a hardness that exceeds the hardness of said application roller so that when said doctor roller and said application roller are touching and both are rotating, said application roller gets indented. Because of said protrusions on said application roller, said nip is narrower locally on the location where said protrusions come into contact with said doctor roller, which leads to less or no additional component being provided on the outer surface of said protrusion. The correspondence of the location of said protrusions with the location of said lowered areas and/or said regions where the application of said additional component is desirable in a lesser or equal manner or undesirable, said lowered areas and said regions can be free of, or in a lesser or equal amount provided with, additional component.

Preferably, said protrusion comprises a lateral side portion that has an inclination with respect to an adjacent portion of the outer surface of said application roller, wherein said inclination is between 90° and 180°, and wherein said lateral side portion preferably extends over at least 50 percent of the height of said protrusion. In doing so, the inventors found that less accumulation of additional component between the region adjacent to said protrusion and said protrusion could be accomplished.

Preferably, said one or more protrusions have a hardness that is equally as hard or preferably harder than the hardness of said adjacent portions of said circumference of said outer surface of said roller

According to a preferred embodiment, said device comprises multiple application rollers rotating around the same or a parallel axis wherein said application rollers preferably all comprise an active coating surface and wherein said application rollers and/or their respective active coating surfaces are separated by a distance that is preferably at least equal to or larger than the width of one of said one or more lowered areas. Due to said distance the additional component will be applied in a lesser manner, or, in fact, not at all in said lowered area. Preferably said application rollers are all fed separately with said additional component, preferably such that the additional component fed to a first roller cannot come into contact with the additional component fed to a second roller, especially before being applied to said slab, sheet or board material. In such case the risk that additional component accumulates in a lowered area can be further limited. Moreover, a different additional component can be applied by two or more of said application rollers. The difference may for example comprise a difference in color tint.

Preferably, said distance between said application rollers and/or active coating surfaces corresponds at least to said lowered areas and/or areas where the application of said additional component is undesirable, and/or at least to a technical region that is at least partially removed during said step of further processing. Preferably, said distance between said application rollers and/or active coating surfaces corresponds or about corresponds to the distance between the global upper surfaces of two adjacent decorative panels comprised in said slab, sheet or board material, i.e. to twice the width of the lower edge area of the finally to be obtained decorative panels and adding the width of said technical region.

In a preferred embodiment, the nip between said doctor roller and said application roller, may be separated into multiple nips by providing at least one removable part between said doctor roller and said application roller. Preferably said at least one removable part directly contacts said rollers. Preferably said separate nips are each fed with said additional component. It is preferred that the placement of said at least one removable part corresponds at least to the location of one of said lowered areas and/or, when a plurality of removable parts is available between said doctor roller and said application roller, to the location of a plurality of said lowered areas and/or other regions where the application of said additional component in an equal or lesser manner is desirable or is undesirable.

According to a preferred embodiment, said device is a digital application device, such as an inkjet printer or a valve jet printer. With such device the application of the additional component may be controlled in a manner that it is applied in an equal or lesser manner in said lowered area. The control of the application amount or location may be predetermined by means of digital data fed to said printer, or may be based on the direct or indirect inline detection of said lowered areas.

The use of a digital application technique for providing said additional component is of interest per se independent from whether or not lowered areas are available in said board, slab or sheet material. Therefore the present invention in accordance with its sixth independent aspect is a method for manufacturing a decorative panel, wherein said method comprises:
- the step of providing a slab, sheet or board material comprising a substrate and an applied thereon top layer comprising at least a printed pattern and a transparent layer applied on said printed pattern, wherein the transparent layer is provided with excavations;
- the step of applying an additional component in a plurality of said excavations;
- the step of further processing, preferably dividing, said slab, sheet or board material into one or more of said decorative panels;
wherein
- said step of applying an additional component in a plurality of said excavations is at least partially executed by digitally applying said additional component.

Preferably, said additional component is at least partially applied through the use of a digital printing engine comprising a plurality of inkjet print heads or valve jet print heads each preferably having a plurality of nozzles. Preferably, the digital printing engine is a single pass printer, wherein the print heads are at standstill and the slab, sheet or board material is continuously moved under said print heads while being printed with said additional component. With a digital application of said additional component, the presence of a residual film on surface portions located in between said excavations may be avoided. Herein, the amount of additional component that is applied on said slab, sheet or board material may be controlled, and is preferably embedded in the digital data controlling the print heads. For example, in addition to firing a particular nozzle or not, the resolution of the data, the drop size fired by a particular nozzle of a print head may be varied. Alternatively or in combination therewith, the amount of additional component to be applied may be controlled by inline direct or indirect detection of said excavations and/or other features when available such as lowered areas. Preferably, said print heads are inkjet print heads of the "drop-on-demand" type.

Preferably said printed pattern is at least partially provided in a similar manner as said additional component. For example, said printed pattern may be provided by digital application of inks on said substrate, preferably with the intermediate of one or more primer layers. Preferably, UV (ultraviolet) curing inks are applied.

Preferably, said excavations are at least partially provided through a digital method such as digital embossing, but said excavations may also be provided through an analog method such as already described in one of the previous independent aspects, such as for example by means of an embossing roller and/or by means of a pressing operation. It is preferred that said excavations are in register with said printed pattern. In case a digital embossing technique is applied for providing said excavations, preferably this technique comprises:
- liquidly applying a curable lacquer, preferably radiation curable, for example UV curable. The liquid application may be performed by means of one or more roller coaters;
- digitally applying a texturing fluid in the not yet cured, or not yet fully cured curable lacquer, wherein said texturing fluid displaces, replaces or alters said curable lacquer locally, wherein in the case of an alteration this concerns a change in curability;
- curing said curable lacquer;
- optionally removing said texturing fluid, e.g. in the case where said texturing fluid replaced or altered said curable lacquer.

Preferably said transparent layer is of a similar chemical buildup as said additional component, preferably said transparent layer and said additional component both comprise an acrylic component. The inventors found that both said additional component and said transparent layer comprising an acrylic component leads to better adhesion between said additional component and said transparent layer. This is also especially the case when UV curing inks are used for providing said printed pattern, since such inks may comprise acrylic components as well.

It is clear that the present invention also relates to a decorative panel obtainable by one of the manufacturing methods disclosed in any one of the previous independent aspects and/or the preferred embodiments thereof. In particular decorative panels having lowered edge regions or lower edge areas that are substantially free of additional component, while the additional component is present in excavations in the global upper surface may offer a notable progress in the imitation of natural wood and other decor types, independently from how they have been manufactured. Therefore, according to its seventh independent aspect, the current invention is a decorative panel having a substrate and an applied thereon top layer comprising at least a printed pattern and a transparent layer applied on said printed pattern, wherein the transparent layer is provided with excavations and wherein the panel comprises a lower edge area at one or both edges of a pair of opposite edges, wherein a plurality of said excavations is provided with an additional component, while at least portions of said lower edge area are substantially free of said additional component or only covered by a residual film of said additional component.

Here below some preferred features are listed that may be combined with any of the above seven independent aspect and/or the preferred embodiments thereof.

In the cases of decorative panels comprising a lower edge area at one or both edges of a pair of opposite edge, preferably said printed pattern extends continuously from the global upper surface of said decorative panel towards and over at least a portion of said lower edge area.

In the cases where an additional component is applied, preferably said additional component is mainly available in said excavations, and is, preferably, absent from the areas between said excavations. Alternatively a residual film may be present on an area between said excavations. Also said lower edge area may comprise local excavations, wherein a plurality of said local excavations are provided with said additional component.

It is preferable that said additional component is an opacifying component and that said additional component preferably improves the aesthetics of said decorative panel. This could be particularly the case when said additional component is applied on a thermoplastic material, as said additional component reduces the plastic look of said decorative panel, which can lead to a better imitation of for example wood.

Another possibility is that said additional component is a coloring agent such as a dye or an ink.

Preferably said residual film of said additional component, when available, has a thickness between 0 and 50 micrometers, preferably less than 10 micrometers, preferably around 5 micrometers.

It is preferred that said substrate comprises at least one of the materials in the list consisting of polyvinyl chloride (PVC), polypropylene (PP), polyethylene (PE), polyurethane (PU), polylactic acid (PLA), polyethylene terephthalate (PET), glycol modified polyethylene terephthalate (PETG) medium-density fiberboard (MDF), high-density fiberboard (HDF), and even more preferred that said substrate comprises thermoplastic material, preferably PVC. It is also preferable that said substrate is free of plasticizers or comprises 5 or less phr plasticizer. For example rigid PVC i.e. PVC with no or less than 5 phr of plasticizer, may be applied. Said PVC may be foamed or unfoamed. In case of a foamed material, preferably a density reduction of at least 5% is obtained due to said foaming, for example a density reduction of 10% or more, or even of 20% or more, as compared to the same composition in an unfoamed condition.

Preferably said substrate comprises filler materials such as calcium carbonate (CaCO3) and/or wood fiber and/or sand and/or talc and/or limestone and the like. Said substrate may for example be a filled plastic composite, such as a filled PVC.

Preferably said excavations each have a maximum depth that ranges between 0 and 350 micron. The inventors found that within this depth range, an optimal visual effect as a result from the application of said additional component is obtained. Especially with excavations having a depth of 100 µm or larger, the additional component may be sufficiently applied therein for creating a noticeable effect, e.g. coloring effect, without completely filling said excavations, such that also a residual haptic effect is obtained.

Preferably said printed pattern is provided on a carrier sheet, wherein said carrier sheet preferably comprises a thermoplastic material and/or a paper based material, which is then laminated and/or glued on said substrate. Another possibility is that said printed pattern is directly printed on said substrate, either analogously or digitally.

Preferably said transparent layer comprises a thermoplastic and/or a paper based material and it is preferable that a lacquer and/or a coating is applied on said transparent layer. It may also be possible that said transparent layer comprises a lacquer and/or a coating.

Said decorative panel preferably comprises, on at least one pair of opposite edges, coupling parts enabling a mechanical locking between two of such decorative panels, wherein in a coupled condition a locking is obtained in a direction perpendicular to the plane of coupled panels, and in a direction in said plane and perpendicular to the coupled edges. Preferably, said coupling parts are provided in one piece with the material of the panels, i.e. without inserts at the respective edges. Preferably, said coupling parts are substantially realized as a tongue-in-groove connection, wherein said tongue and groove are provided with mechanical locking parts preventing the drifting apart of said tongue and groove.

Possibly, said substrate comprises a locally stressed zone. Such locally stressed zone may be a result from the step of providing lowered areas into the slab, sheet or board material, especially when such lowered areas are obtained by a pressing operation by means of e.g. an embossing roller or a discontinuous press. It is preferred that said locally stressed zone at least comprises portions on one or both edges of a pair of opposite edges. Preferably the relevant edges are profiled edges, for example comprising coupling parts.

With a profiled edge the remaining material of said locally stressed zone can be minimized. Preferably, said remaining material may be positioned in at least a region of the coupling parts that is not critical to the overall strength of said mechanical locking system between said decorative panels, and/or said material or remaining material of the locally stressed zone is located at a distance from the weakest part of said coupling parts.

From the above it is clear that a good management of the location of locally stressed zones in the substrate may be important to maintain sufficient locking strength in the coupling parts. Therefore the present invention, in accordance with its eighth independent aspect, is a decorative panel having a substrate and an applied thereon top layer comprising at least a printed pattern and a transparent layer applied on said printed pattern, wherein said substrate is a filled synthetic material and the panel comprises a lower edge area at one or both edges of a pair of opposite edges, wherein said pair of opposite edges is provided with mechanical coupling means allowing two of such panels to become locked to each other at the respective edges in a vertical direction perpendicular to the plane of the coupled panels and in a horizontal direction perpendicular to said edges and in the plane of the coupled panels, wherein said coupling means are basically shaped as a tongue comprising a portion that protrudes from the respective edge and a groove being bordered by an upper lip and a lower lip, wherein said substrate at one or more of said edges comprises locally stressed zones, wherein said stressed zones are available in said protruding portion of said tongue and/or in said lower lip of said groove and/or in said upper lip of said groove. By this location of the locally stressed zones, the remaining material thereof may be minimized, and the effect on the locking strengths may correspondingly be limited.

Preferably said locally stressed zones are mainly available in said protruding portion of said tongue and/or in said lower lip of said groove and/or in said upper lip of said groove.

Preferably said locally stressed zones impact as little material as possible and/or said locally stressed zones are located at a horizontal distance between 0,1 and 1 mm from a thinnest section of said lower lip of said groove.

With a substrate comprising a filled synthetic material is preferably indicated a substrate comprising one, two or more sublayers, wherein at least one said sublayer and preferably all said sublayers comprise a said filled synthetic material. A said filled synthetic material preferably comprises thermoplastic material and filler material, such as organic or inorganic filler material, and optionally plasticizers. The organic fillers can comprise wood particles, such as wood fibers or wood dust. The inorganic fillers can for example comprise chalk, talc or limestone. The weight ratio between the thermoplastic material and the fillers can be between 90:10 and 10:90, preferably between 80:20 and 20:80. For example the panel can comprise a filled synthetic material composite with
- an excess of thermoplastic material meaning that the weight ratio between the thermoplastic material and the fillers is higher than 50:50;
- an excess of fillers meaning that the weight ratio between the thermoplastic material and the fillers is lower than 50:50. Said sublayers can be foamed or can be unfoamed.

It is noted that, in the case of a filled synthetic material comprising a thermoplastic material, such as PVC, said locally stressed zones may appear as whitened areas.

It is clear that the decorative panel of the eighth aspect may comprise a lower edge area at one or both edges of said pair of opposite edges. Said locally stressed zones may be obtained by the provision of said lower edge areas. Hereto, a method in accordance with any of the above disclosed aspects and/or the preferred embodiments thereof may be applied, and the decorative panel of the eighth aspect may show corresponding features as those mentioned in connection to these aspects and preferred embodiments.

The inventors further found that an adapted design of a pressing mold for forming lowered areas may further limit the occurrence and/or severeness of the locally stressed zones. Therefore, the present invention in accordance with its ninth independent aspect is a method for manufacturing a decorative panel, wherein said method comprises at least:
- the step of providing a slab, sheet or board material comprising a substrate and an applied thereon top layer comprising at least a printed pattern and a transparent layer applied on said printed pattern;
- the step of providing one or more lowered areas in said slab, sheet or board material;
- the step of further processing, preferably at least dividing, said slab, sheet or board material into one or more of said decorative panels, wherein at least a portion of said one or more lowered areas forms a lower edge area at one or both edges of a pair of opposite edges of said decorative panels;
with as a characteristic that said step of providing one or more lowered areas in said slab, sheet or board material at least comprises a, preferably discontinuous, pressing operation by means of a press having a pressing mold, wherein said pressing mold comprises at least a first protrusion on that portion of the molds surface that contacts said slab, sheet or board material during the press operation, wherein said first protrusion corresponds at least to the location of at least one of said lowered areas, wherein said pressing mold comprises at least a second protrusion extending generally parallel to said first protrusion, wherein said second protrusion contacts said slab, sheet or board material during the press operation and corresponds to a portion of said slab, sheet or board material that is removed in said step of further processing.

Preferably, said second protrusion deforms said substrate in said pressing operation. More preferably, said second protrusion forms an additional lowered area in said portion of said slab, sheet or board material that is removed in said step of further processing. Preferably the depth and/or the void volume of said additional lowered area is equal or about equal to the depth and/or, respectively, the void volume of said lowered area created by said first protrusion. Herein the depth and volume is defined with the horizontal plane defined by the global upper surface of the slab, sheet or board material as a boundary. Alternatively the depth and/ or void volume of said additional lowered area is smaller than the depth and/or void volume of said lowered area created by said first protrusion, but preferably at least 25% or at least 50% of the depth, respectively the void volume of said lowered area created by said first protrusion. It is not excluded that the depth and/ or void volume of said additional lowered area is larger than the depth and/or void volume of said lowered area created by said first protrusion, but preferably not larger than 125% of the depth, respectively the void volume of said lowered area created by said first protrusion. According to a variant, a plurality or second protrusions or segments thereof may be applied to form a plurality of additional lowered areas in said side portion, wherein the sum of the void volumes of said plurality of additional lowered areas may fulfill the above preferred depth and/or void volume dimensions.

The inventors found that the second protrusion, especially when it deforms the substrate, may form a counterpressure for the shearing forces exerted by the first protrusion, such that the locally stressed zone at the location of said first protrusion is less severe. The locally stressed zone that occurs at the location of said second protrusion may nonetheless be more severe. Preferably, the location of said second protrusion is such that it is vertically above material of the slab, board and sheet material that is completely to be removed. For example, the location of said second protrusion may be vertically above material of the slab, board and sheet material that is distal an outermost or distal point of a profiled edge of a decorative panel to be formed in said step of further processing. In the case of decorative panels having profiled edges comprising coupling parts with the basic shape of a tongue-in-groove connection, preferably having locking parts counteracting the moving apart of the tongue and the groove, the outermost point of such profiled edge may for example be formed by the material of a lip bordering said groove, preferably the groove lower lip, or by the material of the tip of a tongue. In such case, the influence of the more severe locally stressed zone at said second protrusion may be minimized. Remaining locally stressed zones or portions thereof that are created by means of said first and/or second protrusions may be positioned in the decorative panel, preferably within the coupling parts as explained in the context of the eighth aspect of the present invention.

Preferably, said slab, sheet or board material comprises the material for a plurality of decorative panels, wherein at least one of said decorative panels is distanced from an edge of said slab, sheet or board material only by a side portion of said slab, board or sheet material that is removed in said step of further processing, wherein said second protrusion corresponds to a portion within said side portion, and wherein said at least one lowered area corresponds to said first protrusion forming the proximal demarcation of said side portion. It is in particular with decorative panels that are adjacent to such side portion that the use of said second protrusion is of importance, since other than by means of said second protrusion few resistance is offered to minimize or avoid shearing at said first protrusion. First protrusions providing lowered areas that are centrally located in said slab, sheet or board material are preferably adjacent to a first protrusion providing a lowered area to an adjacent panel. In such case, the shearing may be minimized by the adjacency of the first protrusions responsible for providing the adjacent lowered areas of the said decorative panels that are adjacent in said slab, sheet or board material.

In said ninth aspect, with "extending generally parallel" it is meant primarily that the second protrusion is preferably entirely parallel to said first protrusion. However, there are several possibilities to deviate from such exact parallellity, while maintaining the counterpressure exerted by said second protrusion. The following exemplary possibilities are also regarded as fulfilling the "extending generally parallel" character. According to a first example, the second protrusion may extend generally linearly but at a limited angle with said first protrusion, for example at an angle of 10° or less, or of 5° or less, or of 2° or less. According to a second example, the second protrusion may extend in a non-linear manner. In such case, the second protrusion then preferably defines a least square line that extends generally parallel with said first protrusion, i.e. exactly parallel or with a deviation from parallellity with a limited angle as defined above. According to a third example, the second protrusion may be formed by a plurality of whether or not overlapping segments that are either linear or non-linear, wherein these segments do not necessarily have to be of equal extension or shape. Also in this case, the second protrusion then preferably defines a least square line that extends generally parallel with said first protrusion, i.e. exactly parallel or with a deviation from parallellity with a limited angle as defined above. It is remarked that the second protrusion, as seen in cross-section, has a certain width extension. However, the least square line defined by the second protrusion may be defined in several consistent ways, for example by means of the point of maximum height in each of the cross-sections of the second protrusion, wherein, in case several points of maximum height are available in a cross section, that point of maximum height is considered that is closest to said first protrusion.

Said first protrusion and said second protrusion, as seen in cross-section, have, respectively a first location and a second location of maximum height. Preferably the shortest distance between said first location and second location of maximum height, as measured in cross section and transversally to said first and second protrusion, is one or more of
- 5 times or less the thickness of said slab, board or sheet material, 2 times or less the thickness of said slab, board or sheet material;
- 7 times or less, or 5 times or less said maximum height of said first protrusion;
- less than 20 millimeter, less than 10 millimeter, or less than 5 millimeter.

Alternatively, preferably, said lowered area created by said first protrusion and said additional lowered area created by said second protrusion, as seen in cross-section, have, respectively a first location and a second location of maximum depth. Preferably the shortest distance between said first location and said second location of maximum depth, as measured in cross section and transversally to said lowered area and said additional lowered area, is one or more of
- 5 times or less the thickness of said slab, board or sheet material, 2 times or less the thickness of said slab, board or sheet material;
- 7 times or less, or 5 times or less said maximum depth of the lowered area provided by said first protrusion;
- less than 20 millimeter, less than 10 millimeter or less than 5 millimeter.

Preferably, said first location is at a depth of 0.6 to 1.5 millimeter, or of 0.75 to 1.25 millimeter. The depth of said second location may be equal, or, preferably slightly higher, for example between 0.9 and 1.1 times the depth of said first location. The inventors note that a higher second protrusion may give a good and certain limitation of the severeness of stressed zones at the location of said lowered areas formed by said first protrusion.

When considering the distance between said first location and said second location, the shortest or smallest distance between these locations may be considered, for example when said locations are relatively wide, as seen in a cross section.

The relative proximity of the first and second protrusion can lead to an optimal counterpressure by means of said second protrusion to the shearing force exerted by said first protrusion.

It is noted that the distance between said first location and said second location, be it of the maximum height of the respective protrusion or of the maximum depth of the respective lowered area, may be different at opposite side portions of said slab, sheet or board material. For example, in the case of decorative panels having a tongue-in-groove connection, for example with locking parts, the distance may be larger at a side portion that is adjacent an eventual panel edge having a coupling part with a groove shape, than at a side portion that is adjacent to an eventual panel edge having a coupling part with a tongue shape. This may especially be the case when the groove is bordered by an upper lip and a lower lip, wherein the lower lip extends beyond the upper lip. The smallest distance may be within 35% to 70% of the larger distance.

The distance between said first location and said second location is preferably such that said second location is distal the contour of the coupling parts to be formed on the respect edge.

Preferably, said second protrusion extends at least uninterruptedly along the entire length of said first protrusion, or at least along a length corresponding to the entire length or about the entire length or at least 80% of the entire length of a lower edge formed by the lowered area that is created by said first protrusion. Alternatively, said second protrusion may comprise one or more interruptions along the length of said first protrusion or along a length corresponding to the entire length of a lower edge area formed by the lowered area that is created by said first protrusion. In such case, preferably one or more of the following measures are taken in order to effectively minimize the severeness of stressed zones:
- the measure that any interruption in said second protrusion is smaller than 20%, or smaller than 10% or smaller than 5%, of the entire length of a lower edge area formed by the lowered area that is created by said first protrusion;
- the measure that any interruption in said second protrusion is smaller than 5 times the thickness of the slab, sheet or board material;
- the measure that the sum of the length of all interruptions in said second protrusion is smaller than 25% of the entire length of the lower edge area formed by the lowered area that is created by said first protrusion;
- the measure that said pressing mold comprises at least a third protrusion extending generally parallel to an interruption in said second protrusion.

Preferably the length of an interruption is considered in a direction parallel to said first protrusion.

Preferably, a second protrusion is at least provided extending generally parallel to at least one outermost first protrusion of said pressing mold. Such second protrusion then preferably provides an additional lowered area in a first side portion of said slab, sheet or board material, namely in a portion forming a first edge of said slab, sheet or board material, wherein said first side portion is the only material distancing the lowered area formed by said first protrusion from said first edge of said slab, sheet or board material. In the case of longitudinal and oblong decorative panels, preferably said first protrusion is provided for forming a lowered area that provides a lower edge area at one of the longitudinal pair of edges of a finally to be obtained panel. It is clear that said first side portion is intended to be removed in said step of further processing. Preferably, a further second protrusion is provided for forming a further additional lowered area at a second side portion of said slab, sheet or board material, namely in a portion forming a second edge of said slab opposite said first edge, wherein said second portion is thus opposite said first side portion. Said further second protrusion then preferably is extending generally parallel to a further first protrusion providing a lowered area for forming a lower edge area at one of the longitudinal pair of edges of a further finally to be obtained decorative panel, wherein the material of said panel is located in said slab, sheet or board material adjacent said second side portion. One or more second protrusions may similarly be available for forming additional lowered areas at one or more of the transversal side portions of said slab, sheet or board material, namely in one or more portions forming a transversal edge of said slab, sheet or board material, wherein these second protrusions then are extending generally parallel to first protrusions providing lowered areas for forming a lower edge area at one of the short pair of edges of a finally to be obtained decorative panels.

It is clear that the method of the ninth aspect may be combined with any of the methods from previous aspects and/or their preferred embodiments.

The invention further is a pressing mold for use in a method of the ninth aspect of the invention, with as a characteristics that said pressing mold comprises said first and said second protrusion. More particularly said pressing mold comprises a plurality of adjacent surface sections, wherein each surface section corresponds to a decorative panel, and wherein at least one surface section comprises said first protrusion, wherein said first protrusion is distanced from an edge of said pressing mold only by a side portion of the pressing mold that is free from surface sections corresponding to a decorative panel, or, in other words, said first protrusion forms part of an outermost or distal surface section, and wherein said side portion of the pressing mold comprises a second protrusion extending generally parallel to said first protrusion.

Preferably, said first and said second protrusion have the same height or wherein the difference in height between said first and second protrusion is less than 15% of the height of the highest of the first and second protrusions.

The cross-section of said first and said second protrusion may be identical, or essentially identical. Preferably, however, said first and said second protrusion have a mutually different shape. For example, said second protrusion may be basically U-shaped, while said first protrusion is basically V- shaped, and/or, said first and said second protrusion may have a comparable height, for example with the height of said second protrusion between 0.9 and 1.1 times the height of said first protrusion, but have a width, as seen in cross-section at half their respective depth which is significantly different from each other, for example with the width at half the depth of said second protrusion being between 0.25 and 0.85 times the width at half the depth of said first protrusion. For example, said second protrusion may be basically U-shaped, while said first protrusion is basically V- shaped.

It is further noted that, in relation to any of the above independent aspects and/or preferred embodiments thereof, the decorative panel may comprise an additional layer between the substrate and the top layer. Said additional layer may comprise a foamed thermoplastic material. In the cases where the substrate comprises PVC, said foamed thermoplastic material may be foamed PVC and preferably comprises a higher amount of plasticizer than the amount of plasticizer present in the substrate. Preferably said additional layer may be laminated or glued on top of said substrate or, when said substrate is extruded, said additional layer may be co-extruded with said substrate. The inventors found that said additional layer facilitates the step of providing said lowered areas in particular when said step is executed by means of a pressing or embossing operation. It is also noted that said lowered areas preferably are mainly provided into said additional layer and that said substrate is only partially or not at all deformed by said pressing or embossing operation. This way the presence of locally stressed zones in said substrate is minimized. In the case said lowered areas are provided by means of a pressing operation, it is preferred that a discontinuous press is used, which is heated within a range of 100°C and 150°C. Preferably the slab, sheet or board material has a temperature lower than 65°C. With these preferred process temperatures, the inventors have found that the spring back of the additional layer is minimized.

With the intention of better showing the characteristics of the invention, herein below, as an example without any limitative character, some preferred embodiments are described, with reference to the accompanying drawings, wherein:
Figure 1 is a perspective drawing representing a decorative panel obtained through a method according to the invention;
Figure 2, at a larger scale, is a cross-section along the line indicated with II-II in figure 1;
Figure 3 illustrates some steps in a method in accordance with the first aspect of the invention; and
Figures 4 and 5, at a larger scale, are cross-sections respectively along the lines indicated with IV-IV and V-V in figure 3;
Figure 6 illustrates some steps in a method, amongst others in accordance with the first aspect of the invention;;
Figure 7 illustrates some steps in a method amongst others in accordance with the second aspect of the invention;
Figure 8 at a larger scale shows a view on the area indicated with F8 in figure 7;
Figure 9, at a larger scale, is a cross-section along the line indicated with IX-IX in figure 7;
Figure 10 at a larger scale shows a view on the area indicated with F10 in figure 7;
Figure 11 at a larger scale gives a view on the area indicated with F1 1 in figure 9, though for a variant;
Figure 12, at a larger scale, gives a view of the area indicated with F12, in figure 7, though for a variant;
Figure 13, at a larger scale, gives a view of the area indicated with F13, in figure 7, though for a variant;
Figure 14, at a larger scale, gives a view of the area indicated with F14, in figure 11, though for a variant;
Figure 15, at a different scale, is a cross-section along the line indicated with XV-XV in figure 13;
Figure 16, at a different scale, is a perspective view of the area indicated with F16, in figure 13, though for a variant;
Figure 17, in a view similar to that of figure 8, represents a variant;
Figure 18 is a top view on a pressing mold for use in a method in accordance with the ninth aspect of the invention;
Figure 19 is a cross-section in accordance with lines IXX-IXX indicated on figure 18;
Figure 20 and 21 in a same view illustrate variants; and
Figures 22 to 25 in a view on the area indicated with F22 in figure 19 represents variants.

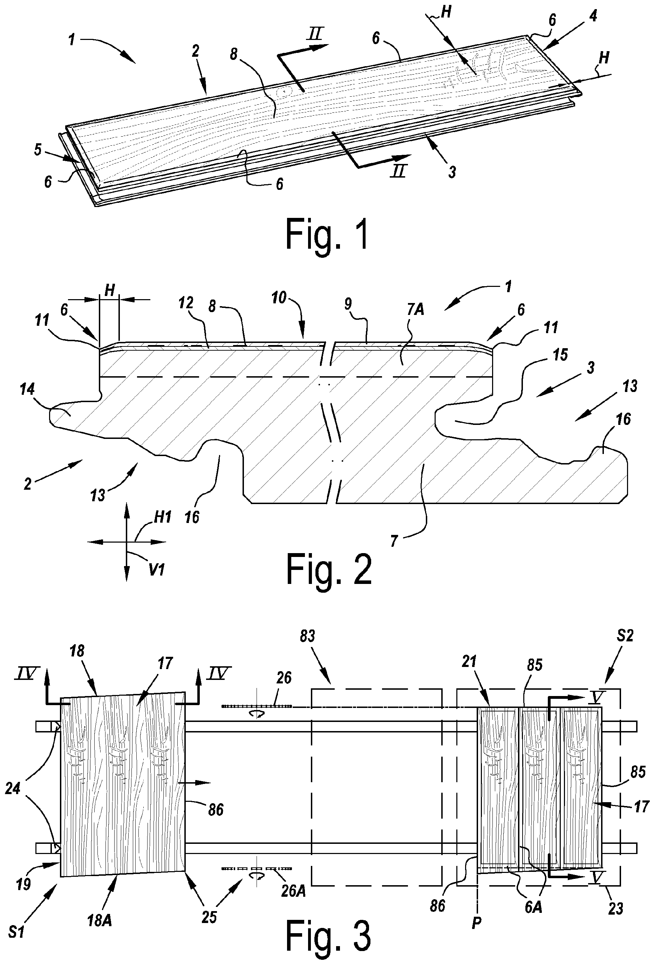

Figure 1 shows a decorative panel 1, more particularly a floor panel. The decorative panel 1 is rectangular and oblong and is provided with a longitudinal pair of opposite edges 2-3 and a short pair of opposite edges 4-5.

Figure 2 shows that the floor panel 1 is provided with lower edge areas 6 at least at both edges 2-3 of the longitudinal pair of opposite edges. Preferably, as represented in figure 1, also both edges 4-5 of the short pair of opposite edges are provided with lower edge areas 6. The lower edge areas 6 at the short pair of opposite edges 4-5 may extend over a shorter horizontal distance H than the lower edge areas 6 at the long pair of opposite edges 2-3 do.

Figure 2 further clearly shows that the decorative panel 1 comprises a substrate 7 and a provided thereon printed pattern 8 and a transparent layer 9. The printed pattern 8 and the transparent layer 9 extend continuously from the global upper surface 10 of the decorative panel 1 towards and on said lower edge areas 6. Preferably said printed pattern 8 extends continuously up to the respective upper edge 11.

In the example of figure 2, said printed pattern 8 is provided on a thermoplastic film 12.

The substrate 7 is preferably a filled synthetic material comprising synthetic material, which is preferably a thermoplastic material, such as PVC (polyvinyl chloride), PP (polypropylene), PET (polyethylene terephthalate) or PETG (glycol modified polyethylene terephthalate) and comprising filler material. As a filler material, preferably calcium carbonate, is applied.

The decorative panel 1 of the example has been provided with profiled edges on the longitudinal pair of edges 2-3 and on the short pair of edges 4-5. The profiled edges are provided with coupling parts 13 allowing to couple two of such decorative panels 1 at the respective edges 2-3, such that in a coupled condition a locking is obtained in a direction V1 perpendicular to the plane of coupled panels and/or in a direction H1 in said plane and perpendicular to the respective edges 2-3. In the example, the coupling parts are basically shaped as a tongue 14 and groove 15, wherein said tongue 14 and groove 15 are provided with locking parts 16 preventing the drifting apart thereof.

Alternatively in figure 2, as indicated by the dashed line, the decorative panel 1 may comprise an additional substrate layer 7A between the substrate 7 and the thermoplastic film 12. Said additional layer 7A may comprise a foamed thermoplastic material. In the cases where the substrate 7 comprises PVC, said foamed thermoplastic material may be foamed PVC and preferably comprises a higher amount of plasticizer than the amount of plasticizer present in the substrate 7. Preferably said additional substrate layer 7A may be laminated or glued on top of said substrate 7 or, when said substrate 7 is extruded, said additional substrate layer 7A may be co-extruded with said substrate 7. The substrate 7 and the additional substrate layer 7A could also be indicated as a substrate as such, wherein the substrate has two sublayers.

Figure 3 shows a method for manufacturing the decorative panel of figures 1 and 2. The method comprises the step S1 of providing a slab, sheet or board material 17 comprising a substrate 7 and an applied thereon top layer comprising at least a printed pattern 8 and a transparent layer 9 applied on said printed pattern 8 and the step S2 of providing one or more lowered areas 6A in said slab, sheet or board material 17. The step of further processing, preferably at least dividing, said slab, sheet or board material 17 into one or more of said decorative panels 1, wherein at least a portion of said one or more lowered areas 6A forms a lower edge area 6 at one or both edges 2-3 of a pair of opposite edges of said decorative panels 1.

Firstly, and not represented here, said step of providing said slab, sheet or board material 17 comprises providing a material in and endless format and transversally cutting at least said substrate 7 from said material, for example by means of a punch, guillotine or flying saw. The transversal edges 18 cut in this manner may lead to a lack of squareness in the obtained slab, sheet or board material 17. Said material may be provided at least by extrusion, and preferably, subsequently providing said top layer on the extruded material, for example by means of thermal lamination of one or more prefabricated sheets, e.g. a printed decorative foil and a transparent foil. During the extrusion a first reference edge 19 may be provided by machining and straightening the longitudinal edges of said slab, sheet or board material 17, preferably prior to said transversal cutting.

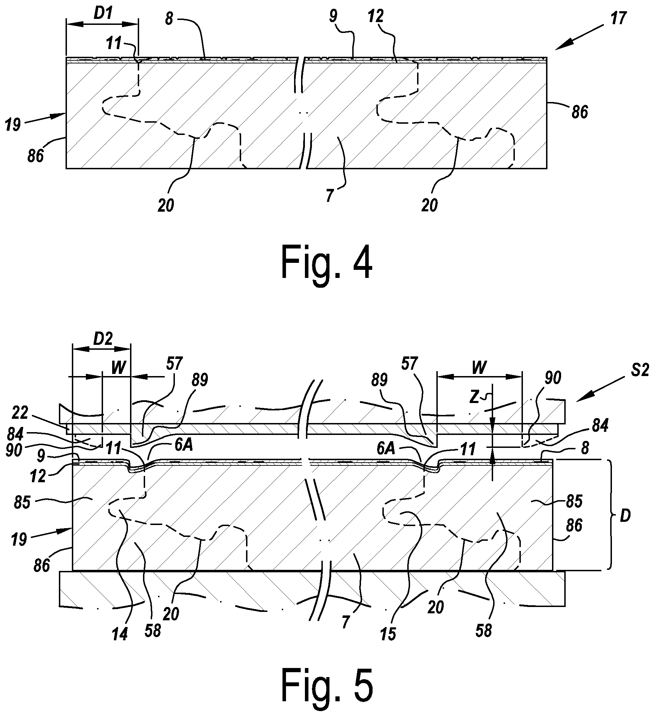

Figure 4 shows a cross-section of the provided slab, sheet or board material 17 and the contours 20 of the coupling parts 13 to be obtained in the profiled edges. The provided slab, sheet or board material 17 may comprise excavations formed in said transparent layer, for example excavations imitating wood pores.

Figure 4 also shows that said first reference edge 19 is provided at a predefined distance D1 from the lower edge area 6 or the upper edge 11 to be obtained.

The step S2 of providing one or more lowered areas 6A in said slab, sheet or board material 17 in the example of figure 3 at least comprises a discontinuous pressing operation by means of a press 23 having a pressing mold 22, as shown in figure 5. Prior to said pressing operation at least a second reference edge 21 is machined at least to said substrate 7, wherein said second reference edge 21 is at a predefined distance D2 from and preferably parallel to one upper edge of said pair of opposite edges 4-5. In this case the second reference edge 21 is parallel to an upper edge 11 of said short pair of opposite edges 4-5.

Said first reference edge 19 is used for aligning said slab, sheet or board material 17 to said pressing mold 22, in that said slab, sheet or board material 17 is driven into said press 23 by means of a cart and/or grippers 24, wherein said slab, sheet or board material 17 is delivered into said press 23 with said first reference edge 19 at a predefined position P, for example with an accuracy allowing a tolerance of 0.25 mm or less. It is possible to equip said press 23 with one or more stop surfaces to support an accurate positioning.

It is clear that, in this case said second straightened edge or second referenced edge 21 is provided in a device 25 where said first straightened edge 19 is used as a reference. In the example said second straightened edge 21 is provided while said slab, sheet or board material 17 is being delivered in said press 23.

Figure 3 shows that a saw or milling cutter 26 can be positioned to provide said second straightened edge 21. Optionally also the opposite transversal edge 18A can be straightened by means of a second saw or milling cutter 26A.

Preferably, said one or more reference edges 19-21 are used as a reference in said further processing. Preferably, but not shown here, said one or more reference edges 19-21 are used as a reference in said dividing of said slab, sheet or board material 17. Preferably said slab, sheet or board material 17 is divided into panels 1 having approximately the desired dimensions of the decorative panels 1. Preferably said further processing at least comprises providing, more particularly, milling said profiled edges to said pair of opposite edges 2-3.

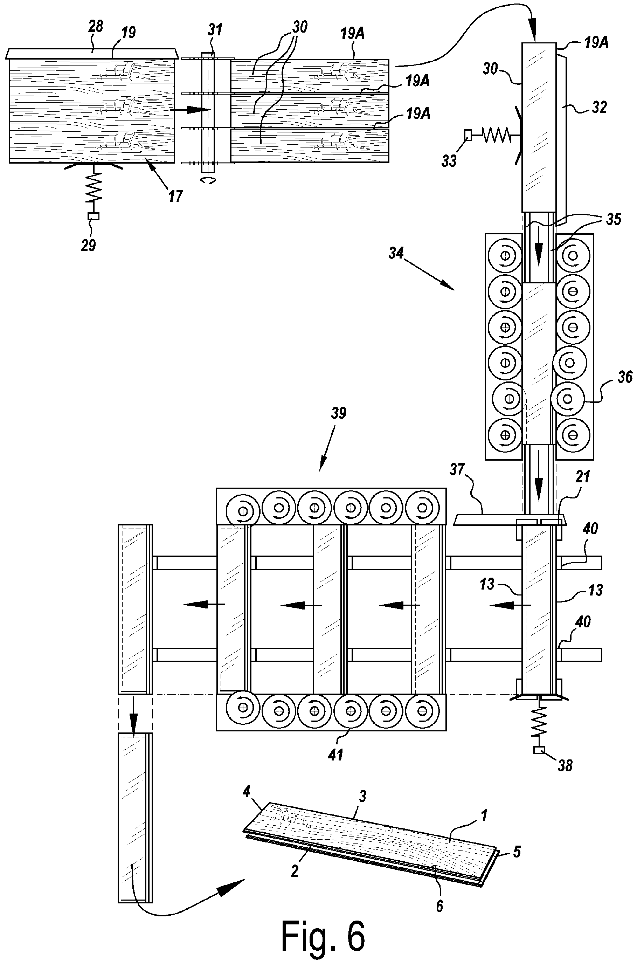

Figure 6 shows a possibility of said further processing. Said slab, sheet or board material 17 is pushed against a fixed ruler 28 by means of for example a spring system 29, in a way that said fixed ruler 28 and the first reference edge 19 touch. Said slab, sheet or board material 17 is then divided into one or more semi-finished panels 30 by a dividing apparatus 31, for example by means of multiple sawing blades. Secondary reference edges 19A parallel to said first reference edge 19 are then created by said dividing apparatus 31. Said secondary reference edges 19A may be used to prevent that the one or more lower edge areas 6A are milled away in further processing, because said secondary reference edges 19A are located at a known distance, not shown here, from said one or more lower edge areas.

Hereafter the semi-finished panel 30 having approximately the desired dimensions of the decorative panel 1 is placed against a fixed ruler 32 with its reference edge 19A and with its global upper surface 10 facing downwards. Said decorative panel 1 is kept in position against said fixed ruler 32 for example, as illustrated in figure 6, by means of a spring system 33. Said semi-finished panel 30 is then fed into a first milling machine 34, said first milling machine 34 comprises multiple milling tools 36 on both sides, to mill profiled edges to said pair of opposite edges 2-3. After leaving the first milling machine 34, the semi-finished panel is pushed against a fixed ruler 37 with its short side, by means of a spring system 38. Said semi-finished panel then enters the second milling machine 39 by means of a cam chain 40, said second milling machine 39 comprises multiple milling tools 41 on both sides, to mill profiled edges to the short pair of opposite edges 4-5. Said milling tools 41 are positioned in a manner that the lower edge areas extending over a horizontal distance H on the decorative panel 1 are not milled away. Because the reference edges 19A, 21 are aligned with said fixed rulers 32,37, the location of said lower edge areas 6 is known and the necessary position of said milling tools 36, 41 can be calculated. After said milling of the short pair of opposite edges 4-5, said decorative panel 1 comprising one or more lower edge areas 6, is finished with the desired dimensions.

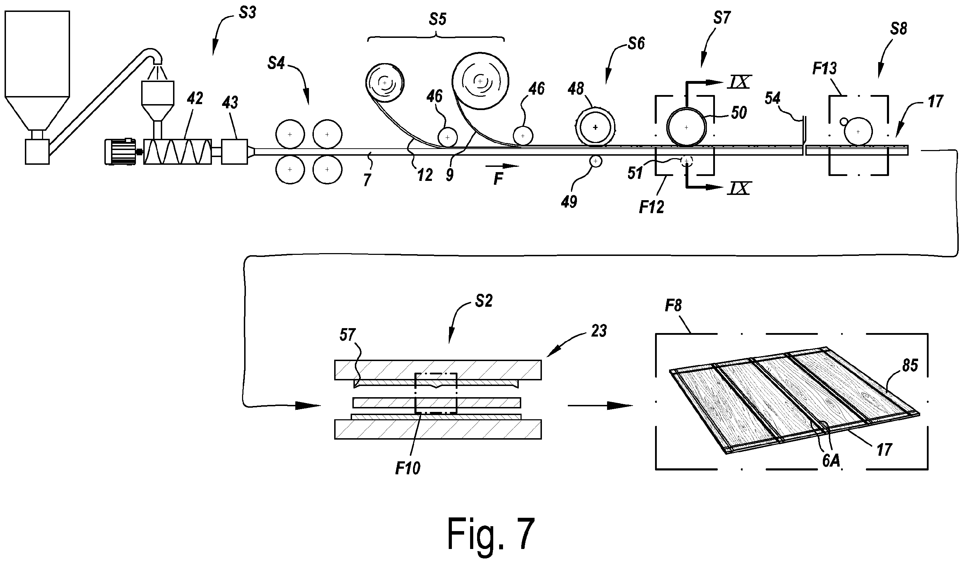

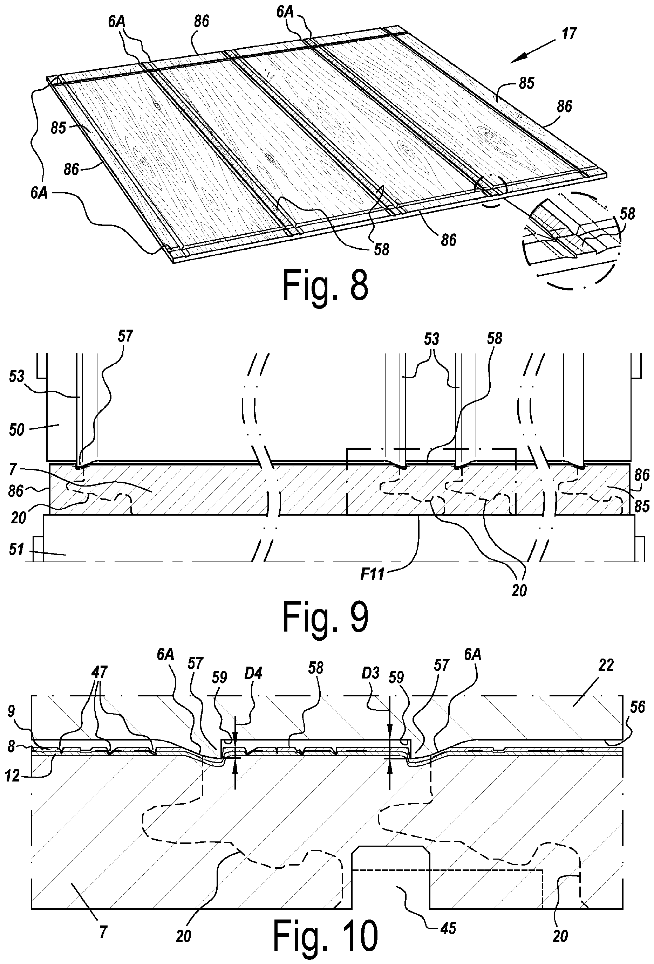

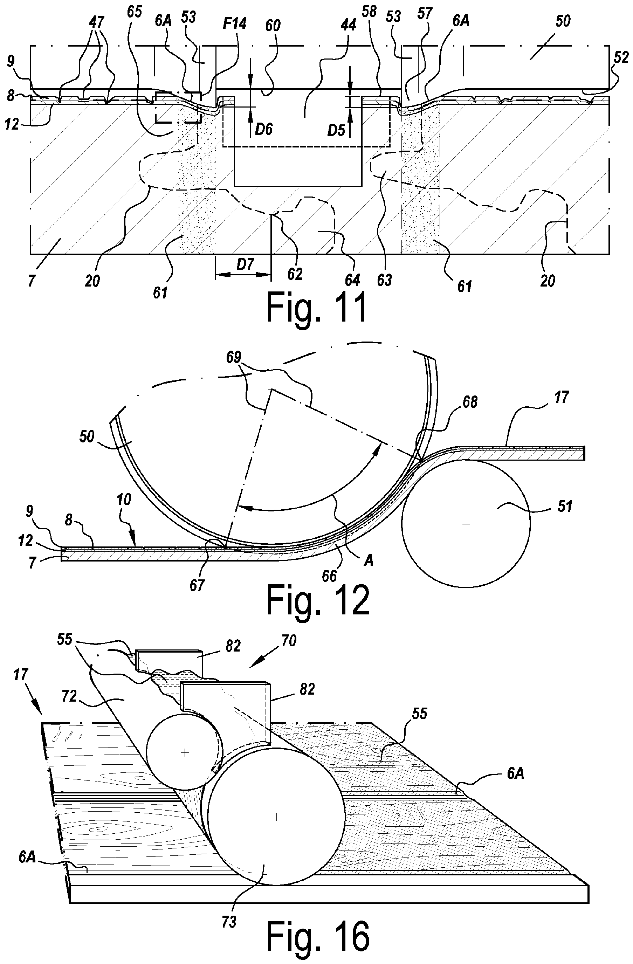

Figure 7 illustrates a possible method for manufacturing a decorative panel 1, amongst others in accordance with the second aspect of the invention. The method comprises the step S3 of extruding a filled synthetic composite material blend. Herein a filled synthetic composite material blend is fed into an extruder 42. Preferably said filled synthetic composite material blend comprises synthetic material and filler material. Said synthetic material is a thermoplastic material, preferably polyvinyl chloride comprising plasticizers in an amount of 5 phr or less, or no plasticizer at all, and the filler material may be calcium carbonate. Said blend is then extruded through a die 43 to provide a substrate 7 in endless format. Said die 43 may be provided with an adapted slot nozzle opening for example to accommodate for top and/or bottom recesses 44-45 in said substrate 7 as shown in figure 10 and figure 11.

The method further comprises the step S4 of calendaring said substrate 7 for calibrating and moving the substrate 7 in the feeding direction F. The method further comprises the step S5 of laminating a thermoplastic film 12, comprising a printed pattern 8, as well as a transparent layer 9 onto said substrate 7 by means of lamination rollers 46.

The method further comprises the step S6 of at least partially providing said transparent layer 9 with excavations 47. Preferably said step S6 is at least partially executed separately from, preferably prior to the step S7 or S2 of providing lowered areas 6A in the slab, sheet or board material 17. Preferably said step S6 of providing said transparent layer 9 with excavations 47 is at least partially performed by an embossing roller 48 where said embossing roller 48 is preferably heated to a temperature within the range of 140 to 180 °C. Preferably said embossing roller 48 is used in combination with a counter pressure roller 49. In the case an embossing roller 48 is used to at least partially provide said transparent layer 9 with excavations 47, it is preferred that said slab, sheet or board material 17, comprising said transparent layer 9 is provided to said embossing roller 48 in an endless format.

The method may further comprise the step S7 of providing one or more lowered areas 6A in the slab, sheet or board material by means of an additional embossing roller 50. Said additional embossing 50 roller is preferably used in combination with an additional counter pressure roller 51. Said additional embossing roller 50 is then heated preferably within the range of 130 to 160°C. According to another embodiment of the invention, it may also be possible that said excavations 47 which are at least partially provided in step S6 are pre-formed in said step S6 and fully formed in the step S7 of providing one or more lowered areas 6A in the slab, sheet or board material 17 by an additional embossing roller 50. It may also be preferable that said lowered areas 6A are pre-formed during said step S6 of at least partially providing said transparent layer with excavations and that said lowered areas 6A are fully formed during said step S7 of providing one or more lowered areas 6A by an additional embossing roller 50. Said additional embossing roller 50 comprises a circumference 52 comprising at least one protrusion 53 that corresponds to the location of at least one of said lowered areas 6A. This is shown in figure 9, which is a section view of said additional embossing roller 50 with said slab, sheet or board material 17 and said additional counter pressure roller 51, annotated by the line IX-IX. An alternative embodiment of said step S7 of providing one or more lowered areas by an additional embossing roller 50, annotated by the box F 12, is shown in figure 12.

Said slab, sheet or board material 17 in endless format is then cut into a slab, sheet or board material 17 in discontinuous format, for example as shown in figure 7, by means of a guillotine 54.

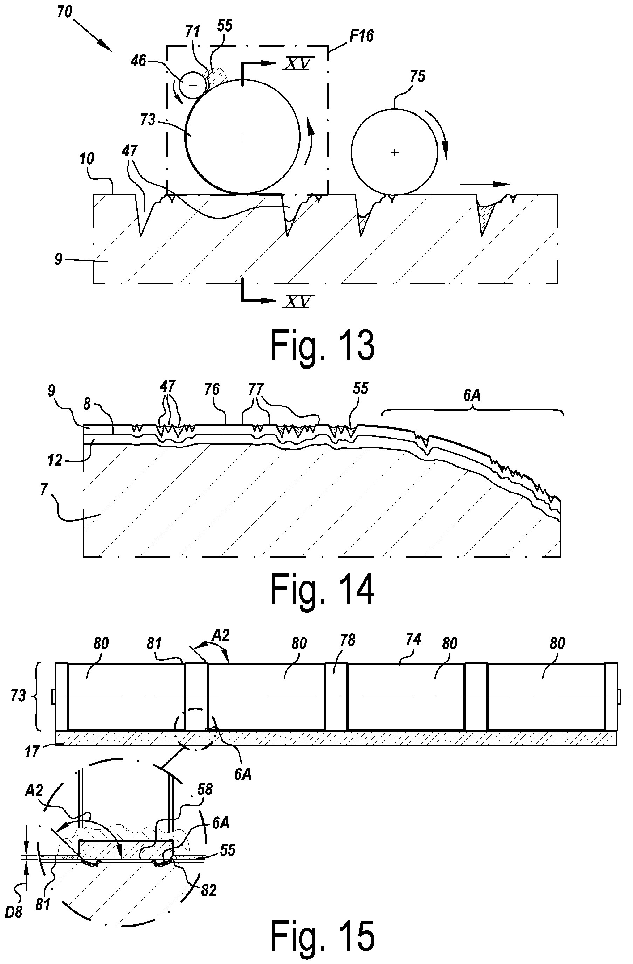

Preferably, in the case the optional step S7 of providing one or more lowered areas 6A in the slab, sheet or board material 17 by means of an additional embossing roller 50 is not performed, the method further comprises the step S8 of applying an additional component 55 in a plurality of said excavations 47. A preferred embodiment of said step S8 of applying an additional component 55, annotated by the box F 13, is shown in figure 13.

After said step S8, the method further comprises the step S2 of providing one or more lowered areas 6A in the slab, sheet or board material 17 by means of a press 23, preferably a discontinuous press 23. According to another embodiment of the invention, it may also be possible that said excavations 47 which are at least partially provided in step S6 are pre-formed in said step S6 and fully formed in the step S2 of providing one or more lowered areas 6A in the slab, sheet or board material 17 by a press 23, preferably a discontinuous press 23. It may also be preferable that said lowered areas 6A are pre-formed during said step S6 of at least partially providing said transparent layer with excavations S6 and that said lowered areas 6A are fully formed during said step S2 of providing one or more lowered areas by a press 23, preferably a discontinuous press 23.

Said press 23, preferably said discontinuous press 23, of said first possibility preferably comprises a mold portion 22, wherein said mold portion 22 has a global surface 56 preferably comprising at least one protrusion 57 on that portion of the molds surface that contacts said slab, sheet or board material during the press operation, with the characteristic that said protrusion 57 corresponds at least to the location of said lowered areas 6A. A detailed view of a preferred embodiment of said preferably discontinuous press 23, annotated by box F10, is shown in figure 10.

A perspective view of the slab, sheet or board material 17 obtained after step S2, is shown in figure 7. A preferred embodiment of said slab, sheet or board material 17, annotated by box F8, is shown in figure 8.

Figure 8 shows a perspective view of a slab, sheet or board material 17 as referenced by F8 in figure 7, wherein said slab, sheet or board material 17 preferably at least comprises a printed pattern 8 and a transparent layer 9 as well as lowered areas 6A on the long sides 2-3 of the to be obtained decorative panels 1 as well as lowered areas 6A on the short sides 4-5 of the to be obtained decorative panels 1. Said lowered areas 6A continuously extend over the whole length, in case of lowered areas 6A on the long sides 2-3 of the to be obtained decorative panels 1, and over the whole width, in case of lowered areas 6A on the short sides 4-5 of the to be obtained decorative panels 1, of said slab, sheet or board material 17. A plurality of technical regions 58 is also shown in figure 8. Said regions 58 are technical in the sense that the material in said region 58 is at least partially absent from said decorative panels 1. Said technical regions 58 preferably at least partially comprise coupling parts 13 for the to be obtained decorative panels 1 and said technical regions 58 are preferably delineated by said lowered areas 6A on the long sides 2-3 as well as on the short sides 4-5 of the to be obtained decorative panels 1. An enlarged detail, is also shown in figure 8, to clarify the continuity of said lowered areas 6A.

Figure 9 shows a section view of an additional embossing roller 50 with a slab, sheet or board material 17 and an additional counter pressure roller 51, as annotated by the line IX-IX in figure 7. Said additional embossing roller 50 is heated to a temperature preferably within the range of 130 to 160°C. Said additional embossing roller 50 comprises a circumferential surface 52 comprising at least one protrusion 53 that corresponds to the location of at least one of the lowered areas 6A. Said slab sheet or board material 17 preferably comprises a thermoplastic film 12, a printed pattern 8 and a transparent layer 9. Said lowered areas 6A preferably comprise at least parts of the substrate 7, said thermoplastic film 12, said printed pattern 8 and said transparent layer 9. The contours of the coupling parts 20 that are preferably provided in the to be obtained decorative panels 1 are also shown in figure 9 to further specify the approximate location of said lowered area 6A. From this it is clear the lower edge area 6 in said decorative panel 1 comprises at least a part of said lowered area 6A. It is preferred that said slab, sheet or board material 17 is provided in an endless format and that said slab, sheet or board material 17 has some residual heat from previous processing steps such as extrusion S3 and/or lamination S5. Figure 9 also clarifies the location of a technical region 58 present in said slab, sheet or board material 17. From this figure it is clear that multiple decorative panels 1 may be obtained from one slab, sheet or board material 17. An enlarged detail of an alternative embodiment of said section view of said additional embossing roller 50, is annotated by the box F11, is shown in figure 11.

As annotated by F10 in figure 7, figure 10 shows a detailed view of a preferred embodiment of a discontinuous press 23 used for providing said lowered areas 6A in said slab, sheet or board material 17. Said discontinuous press 23 is heated preferably to a temperature within the range of 100 to 150°C, while said slab, sheet or board material 17, more particularly the global upper surface 10 thereof may also be heated before said step of providing said lowered areas 6A by means of radiation and/or convection to a temperature within the range of 25 to 110°C. In another preferred embodiment, said discontinuous press 23 has a temperature within the range of 25 to 75°C during step S2. Said slab, sheet or board material 17 is then preferably heated to a temperature within the range of 60 to 110°C.

Said discontinuous press 23 preferably comprises a mold portion 22, wherein said mold portion 22 has a global surface 56 preferably comprising at least one protrusion 57 on that portion of the molds surface that contacts said slab, sheet or board material 17 during the press operation, wherein said protrusion 57 corresponds at least to the location of said lowered areas 6A. Said one or more protrusions 57 preferably extend from an adjacent portion 59 of said global surface 56 of said mold portion 22 with a height D3, which is larger than the depth D4 of said lowered areas 6A. Alternatively, said one or more protrusions 57 preferably extend from an adjacent portion 59 of said global surface 56 of said mold portion 22 with a height larger than 35% or even larger than 50% of the thickness of said slab, sheet or board material 17.

Said slab sheet or board material 17 preferably comprises a thermoplastic film 12, a printed pattern 8 and a transparent layer 9. Said lowered areas 6A preferably comprise at least parts of the substrate 7, said thermoplastic film 12, said printed pattern 8 and said transparent layer 9. The contours 20 of the coupling parts 13 that are preferably provided in the to be obtained decorative panels 1 are also shown in figure 10 to further specify the approximate location of said lowered area 6A. From this it is clear the lower edge area 6 in said decorative panel 1 comprises at least a part of said lowered area 6A. Figure 10 also clarifies the location of a technical region 58 present in said slab, sheet or board material 17. From this figure it is clear that multiple decorative panels may be obtained from one slab, sheet or board material 17.

In this preferred embodiment said technical regions 58 are provided with one or more recesses 45 at the underside of said slab, sheet or board material 17. Said bottom recesses 45 in said technical regions 58 may accommodate for the formation of said lowered areas 6A. Said bottom recesses 45 in said one or more technical regions 58 are preferably at least partially provided by milling and/or sawing and/or cutting, but can also be at least partially provided by means of embossing and/or pressing. Another possibility is that said recesses 45 in said one or more technical regions 58 are provided by means of extrusion by a die 43 with an adapted slot nozzle opening. Said bottom recesses 45 may be provided in a plurality of different shapes.

Figure 11 shows an enlarged detail of an alternative embodiment of the section view of the additional embossing roller 50 as shown in figure 9, annotated by the box F11. Said embossing roller 50 comprises a circumferential surface 52 comprising at least one protrusion 53 that corresponds to the location of at least one of the lowered areas 6A. Said one or more protrusions 53 preferably extend from an adjacent portion 60 of the circumferential surface 52 of said additional embossing 50 roller with a height D6, which is larger than the depth D5 of said lowered areas 6A. In this alternative embodiment said technical regions 58 are provided with one or more recesses 44 at the upper side of said slab, sheet or board material 17. The top recesses 44 in said technical regions 58 may accommodate for the formation of said lowered areas 6A. Said top recesses 44 in said one or more technical regions 58 are preferably at least partially provided by milling and/or sawing and/or cutting, but can also be at least partially provided by means of embossing and/or pressing. Another possibility is that said recesses 44 in said one or more technical regions 58 are provided by means of extrusion by a die 43 with an adapted slot nozzle opening. Said top recesses 44 may be provided in a plurality of different shapes.

The substrate 7 may comprise one or more locally stressed zones 61. Such locally stressed zones 61 may be a result from the step S2 or S7 of providing lowered areas into the slab, sheet or board material 17, especially when such lowered areas 6A are obtained by a pressing operation by means of e.g. an embossing roller 50 or a discontinuous press 23. Preferably said locally stressed zones 61 are mainly available in said protruding portion 63 of said tongue 14 and/or in said lower lip 64 of said groove 15 and/or in said upper lip 65 of said groove 15. Preferably said locally stressed zones 61 impact as little material as possible and said locally stressed zones 61 are located at a horizontal distance D7 between 0,1 and 1 mm from a thinnest section 62 of said lower lip 64 of said groove 15. An enlarged detail of an alternative embodiment of the lowered area 6A of said slab, sheet or board material 17, annotated by the box F14, is shown in figure 14.

Figure 12 shows an alternative embodiment of the additional embossing roller 50 shown in figure 7 and annotated by the box F12. In this alternative embodiment, preferably during said step S7 of providing said one or more lowered areas 6A, said slab, sheet or board material 17 follows the circumference of said additional embossing roller 50 over an arc shaped section 66 thereof. Herein it is meant that the slab, sheet or board material 17 in feeding direction F, and seen in cross-section, initially touches said additional embossing roller 50 at a first point 67, then follows the circumference of the additional embossing roller 50 to a second point 68 where the slab, sheet or board material 17 interrupts the contact with the additional embossing roller 50, wherein said arc shaped section 66 of the circumference is defined in between said first 67 and second point 68. Said arc shaped section 66 preferably encloses an angle A that lies within a range of 0° to 90°. It is clear that said angle is defined between the radii 69 of the additional embossing roller 50 going through said first 67 and second point 68.

Figure 13 shows a preferred embodiment of the step S8 of applying an additional component 55 in a plurality of excavations 47 in the transparent layer 9 by means of an application device 70. Preferably said method further comprises the step of controlling the amount of additional component 55 that is fed into the nip 71 between two rollers and that is applied on said slab, sheet or board material 17. Said step of controlling may be performed by the application device 70.

Said application device 70 preferably comprises a doctor roller 72 and an application roller 73 and said amount of additional component 55 that is applied in said slab, sheet or board material 17 may be controlled by varying the distance between said doctor roller 72 and said application roller 73 and/or by varying the rotational speed of said doctor 72 and/or said application roller 73. Preferably said doctor roller 72 and said application roller 73 are touching during application of said additional component 55 and the circumferential surface 74 of said application roller 73 is indented by said doctor roller. 72 Preferably, the circumferential surface 74 of said application roller 73 has a hardness between 5 and 25 shore, preferably around 15 shore and said circumferential surface 74 preferably comprises polyurethane (PU).

Preferably after applying said additional component 55 in a plurality of said excavations 47, at least some additional component 55 is removed by a removal roller 75 and/or by brushing and/or grinding, which is not shown here. Said circumferential surface of said removal roller 75 preferably has a hardness between 20 and 80 shore, preferably around 60 shore. Preferably said removal roller 75 rotates in the opposite rotational direction of said application roller 73.

Figure 14 shows an enlarged detail of an alternative embodiment of a lowered area 6A of said slab, sheet or board material 17, annotated by the box F14, as shown in figure 11. In said alternative embodiment, an additional component 55 is already applied in a plurality of excavations 47 in the transparent layer 9. When said additional component 55 is applied by means of an application device 70 comprising at least one application roller 73, the regions 77 of said transparent layer 9 that are adjacent to said excavations 47 may also have at least some additional component 55 applied thereon. At least some additional component 55 may be removed by a removal roller 75 and/or by brushing and/or grinding. After the step of removal of additional component 55, e.g. by said removal roller 75, a residual film 76 of additional component 55 may be present on said regions 77 of said transparent layer 9 that are adjacent to said excavations 47 as not all of the additional component 55 may be removed. This residual film 76 may have a thickness in the range of 0 to 50 micrometers, preferably less than 10 micrometers, preferably around 5 micrometers. After said step of removal, said slab, sheet or board material is provided with said lowered area 6A, which results in said lowered area 6Aalso comprising said residual film 76.

Figure 15 shows a section view of an alternative embodiment of the application roller 73, which is part of an application device 70, shown in figure 13, annotated by line XV-XV, along with a local zoom comprising a local section of a protrusion 78. Said application roller 73 has an outer surface 74 comprising at least one protrusion 78. Said application roller 73 preferably contacts or is in close proximity with the slab, sheet or board material 17 to be provided with an additional component 55. In such case, it is the application roller 73 itself that directly delivers the additional component 55 to the slab, sheet or board material 17 by means of its active coating surface 79. Preferably said one or more protrusions 78 extend outward from an adjacent portion 80 of said outer surface 74 over a distance D8 between 0 and 1 mm. The position of said at least one protrusion 78 preferably corresponds to at least the location of one of said lowered areas 6A and/or, when a plurality of protrusions 6A is comprised on said outer surface 74, to the location of a plurality of said lowered areas 6A and/or other regions where the application of said additional component 55 is desirable in an equal or lesser manner or is undesirable.

Preferably, said one or more protrusions 78 comprise a lateral side portion 81 that has an inclination A2 with respect to an adjacent portion 80 of the outer surface 74 of said application roller 73, wherein said inclination A2 is between 90° and 180°, and wherein said lateral side portion 81 preferably extends over at least 50 percent of the height of said one or more protrusions 78.

Figure 16 shows a perspective view of an alternative embodiment of the application device 70 shown in figure 13. In this alternative embodiment of said device 70, the nip 71 between the doctor roller 72 and the application roller 73, may be separated into multiple nips 71 by providing at least one removable part 82 between said doctor roller 72 and said application roller 73. Preferably said at least one removable part 82 directly contacts said rollers 72-73. Preferably said separate nips 71 are each fed with said additional component 55. Said application roller 73 directly delivers the additional component 55 to the global upper surface 10 of the slab, sheet or board material 17 by means of its active coating surface 79. It is preferred that the placement of said at least one removable part 82 corresponds at least to the location of one of said lowered areas 6A and/or, when a plurality of removable parts 82 is available between said doctor roller 72 and said application roller 73, to the location of a plurality of said lowered areas 6A and/or other regions where the application of said additional component 55 in an equal or lesser manner is desirable or is undesirable.

Figure 3 further illustrates in dashed line an optional preheating equipment 83, for example an infrared or near infrared radiator, for heating said slab, sheet or board material 17 prior to said step S2 of providing said lowered areas 6A.

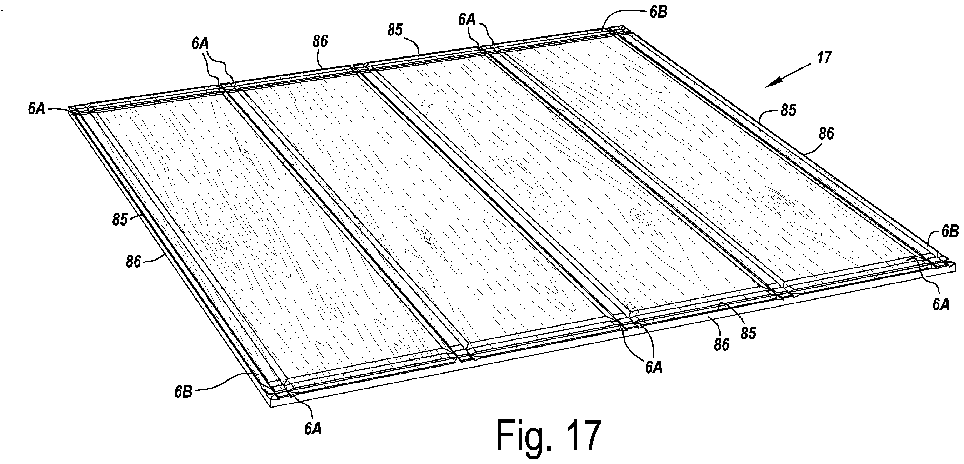

Figure 5 illustrates that the pressing mold 22 may comprise a first protrusion 57 and an optional second protrusion 84 extending generally parallel to said first protrusion 57. Said first protrusion 57 corresponds to the location of a lowered area 6A. Said second protrusion 84 corresponds to a side portion 85 of said slab, sheet or board material 17, or a technical region 58, that is configured to be removed or at least partially removed in said step of further processing. Herein said lowered area 6A forms the proximal demarcation of said side portion 85 or technical region 58, and said lowered area 6A is only distanced from an edge 86 of said slab, sheet or board material 17 by means of said side portion 85. In the example the first protrusion 57 and the optional second protrusion 84 have the same height Z and have essentially a same cross-section. It is clear that in such case an additional lowered area 6B, as shown in figure 17, is provided in said side portion 85 or technical region 58.

It is thus clear that the method and the pressing mold 22 illustrated in figure 5 also form an embodiment of the ninth aspect listed in the introduction when the optional second protrusion 84 is available.

Figure 17 illustrates a slab, sheet or board material 17 wherein lowered areas 6A have been provided by means of a pressing mold 22 and a method having the characteristics of amongst others the ninth aspect of the present invention. Herein the lowered areas 6A of decorative panels 1 that are distanced from an edge 86 of said slab, sheet or board material 17 only by a side portion 85 are flanked by an additional lowered area 6B in said side portion 85 or technical region 58. Figure 17 illustrates that the additional lowered area 6B in said side portion 85 extends generally parallel to the flanking lowered area 6A that forms the proximal demarcation of said side portion 85. In the example of figure 17, an additional lowered area 6B is provided in at least one side portion 85, and in this case in both side portions 85, parallel to the longitudinal pair of opposite edges 2-3 of the decorative panels 1 in said slab, sheet or board material 17. In this case, an additional lowered area 6B is also provided in at least one side portion 85, and in this case in both side portions 85, parallel to the short pair of opposite edges 4-5 of the decorative panels 1 in said slab, sheet or board material 17.

It is clear that such second protrusion 84 at the location of a side portion 85 is not only of interest when using discontinuous presses 23. The second protrusion 84 has similar effect when practiced on an embossing roller 50, for example on the additional embossing roller 50 shown in figure 9. Preferably such second protrusion 84, although not shown in figure 9, would then preferably be available adjacent and distal one or both outermost first protrusions 57. These second protrusions 84 would then provide an additional lowered area 6B in a side portion 85 of the slab, sheet or board material 17.

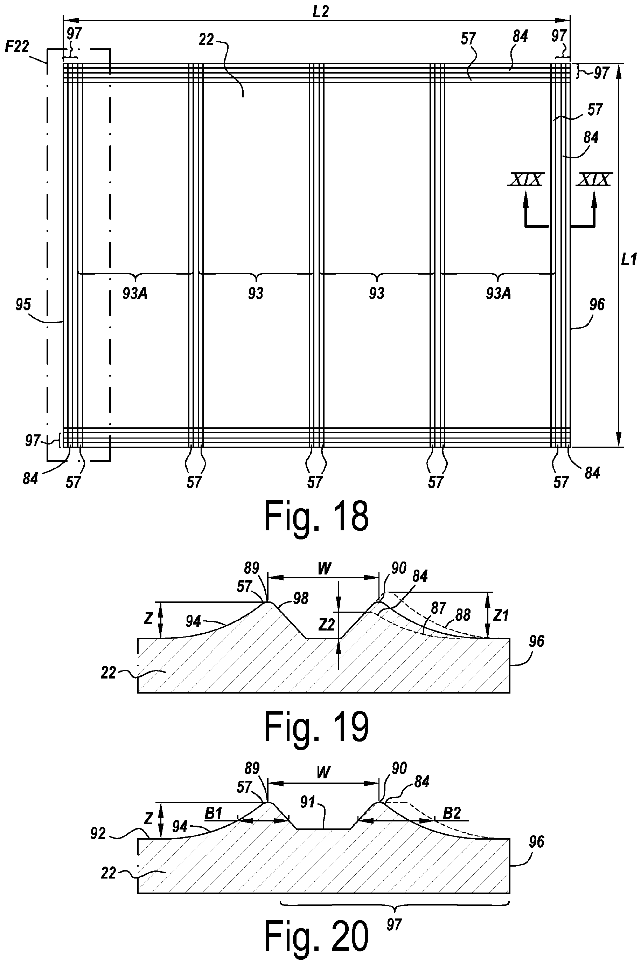

Figure 18 shows a pressing mold 22 having first protrusions 57 and second protrusions 84 extending parallel therewith. In particular, it concerns a pressing mold 22 that may be used for providing the lowered areas 6A and additional lowered areas 6B in the slab, sheet or board material 17 illustrated by means of figure 17. In this case the second protrusions 84 are provided for realizing additional lowered areas 6B at all side portions 85 of the slab, sheet or board material. As is made clear earlier, this is not necessarily the case, and such second protrusion 84 may be available only adjacent one or more first protrusions 57 providing lowered areas 6A for forming lower edge areas 6 at a longitudinal edge 2-3 or at a short edge 4-5 of a decorative panel 1.

Figure 18 further illustrates that the first protrusions 57 have a length L1-L2 greater than the length, in the case of a first protrusion 57 providing lowered areas 6A for forming a lower edge area 6 at a longitudinal edge 2-3 of said decorative panels 1, and/or width of the finally to be obtained decorative panels 1, in the case of a first protrusion 57 providing lowered areas 6A for forming a lower edge area 6 at a transversal or short edge 4-5 of said decorative panel 1. The length L1-L2 of said first protrusions 57 is, in this case, larger than the length, respectively width, of said slab, sheet or board material 17.

Figure 19 illustrates that, as seen in a cross-section, the first protrusion 57 and the second protrusion 84 may be identical, or essentially identical in shape. In this case, the geometry of the first protrusion 57 and second protrusion 84 is mirrored, but otherwise identical, for example of the same height Z. Alternatively, as illustrated with the dashed line 87 and 88, respectively, the second protrusion 84 may have a maximum height Z1-Z2 which is smaller or larger than the height Z of said first protrusion 57, though preferably between 25% and 125% of the height Z of said first protrusion 57.

The first protrusion has a first location 89 of maximum height, and the second protrusion has a second location 90 of maximum height. The distance W between said first location 89 and said second location 90 is, in this case, about two times the height Z of said first protrusion 57.

It is noted that figure 5 illustrates an embodiment where the distance W between the first location 89 and the second location 90 is different at opposite side portions 85 of the slab, sheet and board material 17. Herein the distance W is larger at the side portion 85 adjacent the edge 5 with the groove 15, as compared to the distance at the side portion 85 adjacent the edge 4 with the tongue 14. The location of said second protrusion 84 is such that it is vertically above the technical region 58, more particularly vertically above material of the slab, board and sheet material 17 that is completely to be removed. In such case, the influence of the more severe stressed zone at said second protrusion 84 may be minimized.

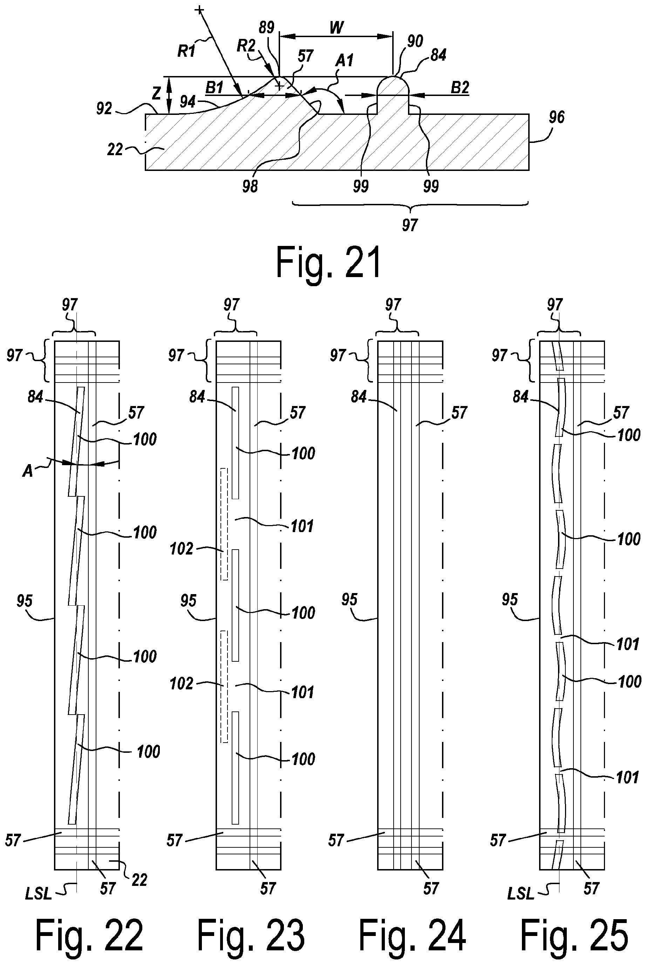

Figure 20 shows an embodiment where the first protrusion 57 and second protrusion 84 form part of a common elevation 91 from the global press plate surface 92. By means of the dashed lines, figure 20 shows that the width B2 of the second protrusion 84 may be larger than the width B1 of the first protrusion 57. Preferably the width B1-B2 of the protrusions 57, 84 is considered at half their respective height Z. The opposite is also not excluded, namely when the second protrusion 84 has a smaller width than the first protrusion 57. Such example will be given by means of figure 21.

It is remarked that the pressing mold 22 shown in figure 18 comprises a plurality of surface sections 93-93A, being bordered on all sides by a first flank portion 94 of a first protrusion 57. This first flank portion 94 forms a surface of the lower edge area 6. Each surface section 93 corresponds to a decorative panel 1. The surface sections 93A comprise at their long edges a first protrusion 57 that is distanced from an edge 95-96 of said pressing mold 22 only by a side portion 97 of the pressing mold 22 that is free from surface sections 93-93A corresponding to a decorative panel 1, or, in other words, said first protrusion 57 forms part of an outermost or distal surface section, and wherein said side portion 97 of the pressing mold 22 comprises a second protrusion 84 extending generally parallel to said first protrusion 57. It is possible to provide second protrusions 84 in between adjacent surface sections 93-93A, however, such is not represented here. In fact the inventors have noted that the close proximity of the first protrusions 57 of surface sections 93-93A of adjacent panels 1 is delivering a counterpressure that brings the defects in the locally stressed zones at the location of these first protrusions 57 to an acceptable level.

Figure 21 represents the most preferred embodiment of a pressing mold 22 in accordance with the ninth aspect of the invention. Herein the first protrusions 57 comprise a first flank portion 94 forming the surface of said lower edge area 6, wherein said first flank portion 94 is curved and has a radius R1 between 2 and 10 mm, preferably about 5 mm. The first protrusions 57 have a location 89 of maximum height Z, wherein said location 89 is positioned on a rounded segment having a radius R2 between 0.2 and 1 mm, preferably about 0.5 mm. The first protrusions 57 have a location 89 of maximum height, wherein said maximum height is between 0.75 and 1.5 mm, preferably about 1.2 mm. The first protrusions 57 comprise a second flank portion 98 opposite the first flank portion 94, wherein said second flank portion 98 is angled at an angle A1 of 110° to 145° with the global surface 92 of the pressing mold 22. Figure 21 clearly shows that the first protrusion 57 has a cross-section essentially defined by said first flank portion 94, said rounded segment and said second flank portion 98. In accordance with the ninth aspect, a second protrusion 84 is provided. The second protrusion 84 is in this case located in a side portion 97 of said pressing mold 22 adjacent an edge 96 thereof. The second protrusion 84 has in this case the same height Z as the first protrusion 57. The width B2 at half the depth of said second protrusion 84 is however significantly lower than the width B1 at half the depth of said first protrusion 57. The second protrusion 84 has flank portions 99 that are essentially parallel, and/or essentially vertical, for example extending at an angle of less than 10° or less than 5° with the vertical. The second protrusion 84 has a U-shape, while the first protrusion 57 has a V-shape.

The distance W between the first location 89 and the second location 90 is in this case about 3 times the height Z. The distance W at an opposite side portion of the pressing mold 22 may be different and is preferably larger, For example about 5 to 6 times the height Z. The side portion 97 illustrated in figure 21 may be applied for pressing a side portion 85 adjacent an eventual edge 2 having a coupling part 13 in the form of a tongue 14.

Figure 22 illustrates that the second protrusion 84 may comprise slanted segments 100. In the example the slanted segments 100 form an angle A2 with the first protrusion 57 of 5°. The least square line LSL through these segments 100 is parallel with said first protrusion 57.

Figure 23 illustrates that the second protrusion 84 may comprise segments 100 separated by interruptions 101 along the length of said first protrusion 57. In dashed line, it is shown that the pressing mold 22 may comprise third protrusions 102 at the location and adjacent to one or more of said interruptions 101.

Figure 24 illustrates that the second protrusions 84 may be non-linear. In the example the second protrusion 84 is undulating. The least square line LSL through these segments 100 is parallel with said first protrusion 57.

Figure 25 illustrates the second protrusion 84 may comprise undulating segments 100 separated by interruptions 101 along the length L1 of the said first protrusion 57.

It is clear that the second protrusions 84 as illustrated in figures 18 to 25 may be combined in any configuration on a single pressing mold 22, and that, thus, the second protrusion 84 extending along a first side portion 97 of the pressing mold 22 can be different, i.e. have a different shape and/or height, from the second protrusion 84 extending along an opposite side portion 97 and/or from a second protrusion 84 extending along a side portion 97 transversal thereto. It is further remarked that the examples in the drawing show first and second protrusions 57-84 at all four side portions 97 of the pressing mold 22. It is however not excluded that no first protrusion 57 and/or no second protrusion 84 are available at one or more of said side portions 97. For example, it is possible that lower edge areas 6 are only to be formed at the longitudinal edges 2-3 of the decorative panels 1, such that no first protrusions 57 are needed, and hence no second protrusions 84 are desired, to press down the short edges 4-5 of the decorative panels 1.

The present invention further is for the following independent aspects and preferred embodiments as defined by the below numbered paragraphs.
1.- Method for manufacturing a decorative panel, wherein said method comprises at least:
   - the step S1 of providing a slab, sheet or board material 17 comprising a substrate 7 and an applied thereon top layer comprising at least a printed pattern 8 and a transparent layer 9 applied on said printed pattern 8;
   - the step S2 of providing one or more lowered areas 6A in said slab, sheet or board material 17; wherein said slab, sheet or board material 17 is optionally heated before said step S2 of providing said lowered areas 6A to a temperature between 25°C and 110°C;
   - the step of further processing, preferably at least dividing, said slab, sheet or board material 17 into one or more of said decorative panels 1, wherein at least a portion of said one or more lowered areas 6A forms a lower edge area 6 at one or both edges 2-3 of a pair of opposite edges of said decorative panels 1;
   characterized in that
   said step of providing one or more lowered areas 6A in said slab, sheet or board material 17 at least comprises a, preferably discontinuous, pressing operation by means of a press 23 having a pressing mold 22, wherein prior to and/or subsequent to and/or during said pressing operation at least one reference edge 19-21 is machined at least to said substrate 7, wherein said reference edge 19-21 is at a predefined distance D1-D2 from and preferably parallel to at least one edge or at least one upper edge 11 of said pair of opposite edges 2-3.
2.- Method according to numbered paragraph 1, characterized in that said step S1 of providing said slab, sheet or board material 17 comprises firstly providing a material in an endless format and transversally cutting at least said substrate 7 from said material, for example by means of a punch, guillotine or flying saw.
3.- Method according to numbered paragraph 2, characterized in that said material at least comprises said substrate 7 and said top layer.
4.- Method according to numbered paragraph 2 or 3, characterized in that said material is provided at least by extrusion, and preferably, subsequently providing said top layer on the extruded material, for example by means of thermal lamination of one or more prefabricated sheets, e.g. a printed decorative foil 12 and a transparent foil, or for example by providing the printed pattern on said extruded material by directly applying inks on said extruded material, possibly with the intermediate of one or more primer layers, and/or one or more transparent layers are provided on said printed pattern by liquidly applying a lacquer or polymeric substance.
5.- Method according to any of the preceding numbered paragraphs, characterized in that said slab, sheet or board material 17 is provided with at least a first edge that has been straightened by machining.
6.- Method according to numbered paragraph 5, characterized in that said at least one straightened edge forms a first reference edge 19, and is for example used for aligning said slab, sheet or board material 17 to said pressing mold.
7.- Method according to numbered paragraph 6, characterized in that said slab, sheet or board material 17 is driven into said press 23 by means of a cart and/or grippers 24, wherein said slab, sheet or board material 17 is delivered into said press 23 with said first reference edge 19 at a predefined position P, for example with an accuracy allowing a tolerance of 0.25 mm or less.
8.- Method according to any of numbered paragraphs 5 to 7, characterized in that said slab, sheet or board material 17 is provided with at least a second edge 21 that has been straightened by machining, wherein said second edge is perpendicular to said first edge.
9.- Method according to numbered paragraph 8, characterized in that said second straightened edge is provided in a device 25 where said first straightened edge is used as a reference.
10.- Method according to numbered paragraph 8 or 9, characterized in that said second straightened edge is provided while said slab, board or sheet material 17 is being delivered in said press, while said slab is in said press 23, and/or while said slab, sheet or board material 17 is exiting said press 23.
11.- Method according to any of the preceding numbered paragraphs, characterized in that said one or more reference edges 19-21 are used as a reference in said dividing said slab, sheet or board material. Preferably, said slab, sheet or board material 17 is divided into panels having approximately the desired dimensions of the decorative panels 1.
12.- Method according to any of the preceding numbered paragraphs, characterized in that said one or more reference edges 19-21 are used as a reference in said further processing.
13.- Method according to any of the preceding numbered paragraphs, characterized in that said method further comprises the step of providing said transparent layer 9 with excavations, wherein this step is preferably at least partially executed separately from, preferably prior to said step S2 of providing said lowered areas 6A in said slab, sheet or board material 17.
14.- Method according to any of the preceding numbered paragraphs, characterized in that said substrate 7 comprises a filled synthetic composite material, preferably the synthetic material is a thermoplastic material, such as polyvinyl chloride, and the filler material may be calcium carbonate, talcum, coal.
15.- Method for manufacturing a decorative panel 1, whether or not in accordance with any of the preceding numbered paragraphs, characterized in that said method comprises:
   - the step S1 of providing a slab, sheet or board material 17 comprising a substrate 7 and an applied thereon top layer comprising at least a printed pattern 8 and a transparent layer 9 applied on said printed pattern 8;
   - the step of providing said transparent layer 9 with excavations 47;
   - the step S2-S7 of providing one or more lowered areas 6A in said slab, sheet or board material 17;
   - the step of further processing, preferably dividing, said slab, sheet or board material 17 into one or more of said decorative panel 1, wherein at least a portion of said one or more lowered areas 6A forms a lower edge area 6 at one or both edges of a pair of opposite edges 2-5 of said decorative panels 1;
   characterized in that
   - said step S6 of providing said transparent layer 9 with excavations 47 is at least partially executed separately from, preferably prior to said step S2-S7 of providing said lowered areas 6A in said slab, sheet or board material 17.
16.- Method according to numbered paragraph 15, characterized in that the step S6 of providing said transparent layer 9 with excavations 47 is at least partially performed by an embossing roller 48, wherein said embossing roller 48 is preferably heated to a temperature within the range of 140°C to 180°C.
17.- Method according to numbered paragraph 15 or 16, characterized in that said slab, sheet or board material 17 is pre-heated by radiation and/or convection or that said slab, sheet, or board material 17 comprises residual heat from processing steps prior to said step S2-S7 of providing one or more lowered areas 6A. Preferably said processing steps comprise one or more of a lamination step, an embossing step and the like.
18.- Method according to any of numbered paragraphs 15 to 17, characterized in that the step S2 of providing one or more lowered areas 6A is performed with a discontinuous press 23, wherein said discontinuous press 23 is preferably heated to a temperature within the range of 100°C to 150°C.
19.- Method according to numbered paragraph 18, characterized in that said press 23 comprises a mold portion 22, wherein said mold portion 22 has a global surface 56 comprising at least one protrusion 57 on the surface that contacts said slab, sheet or board material 17 during the press operation, wherein said protrusion 57 corresponds to the location of said lowered areas 6A.
20.- Method according to numbered paragraph 19, characterized in that said one or more protrusions 57 extend further from an adjacent portion 59 of said global surface 56 than the depth of said lower edge area 6, said one or more protrusion 57 preferably measure between 2 to 4 mm.
21.- Method according to numbered paragraph 20, characterized in that said slab, sheet or board material 17, more particularly the upper surface 10 thereof, is heated within the range of 25 to 110°C.
22.- Method according to any of numbered paragraphs 18 to 21, characterized in that the pressure exerted by said discontinuous press 23 is within the range of 10 to 40 kg/cm²
23.- Method according to any of numbered paragraphs 18 to 22, characterized in that said excavations 47 are at least partially formed by said discontinuous press 23.
24.- Method according to any of numbered paragraphs 15 to 17, characterized in that said one or more lowered areas 6A are at least partially formed by said embossing roller 48.
25.- Method according to numbered paragraph 24, characterized in that the step S7 of providing said lowered areas 6A is at least partially performed by means of an additional embossing roller 50 and wherein said additional embossing roller 50 is heated to a temperature within the range of 130 to 160°C.
26.- Method according to numbered paragraph 24 or 25, characterized in that said embossing roller 48-50 comprises a circumference comprising at least one protrusion 53 that corresponds to the location of at least one of said lowered areas 6A.
27.- Method according to any of numbered paragraphs 15 to 17, characterized in that the step S2 of providing said lowered areas 6A is at least partially performed by means of a press 23, preferably a discontinuous press 23, at a temperature within the range of 25 to 75°C.
28.- Method according to numbered paragraph 27, characterized in that said slab, sheet or board material 17 is heated to a temperature within the range of 60 to 110°C.
29.- Method according to any of numbered paragraphs 15 to 28, characterized in that said slab, sheet or board material 17 comprises a bottom and wherein said bottom comprises the underside of said substrate 7 or the underside of a backing layer and wherein said bottom comprises one or more excavations 47.
30.- Method according to numbered paragraph 29, characterized in that said backing layer comprises a thermoplastic material.
31.- Method according to numbered paragraph 29 or 30, characterized in that the method comprises the step of adding said one or more excavations 47 to said bottom and wherein said step is at least partially performed by an embossing roller 48-50 or a discontinuous press 23.
32.- Method according to any of numbered paragraphs 15 to 31, characterized in that said slab, sheet or board material 17 comprises one or more technical regions 58 that are at least partially removed in said step of further processing.
33.- Method according to numbered paragraph 32, characterized in that said one or more technical regions 58 comprise one or more recesses 44-45 and in that said recesses 44-45 could be present at the underside and/or the top of said slab, sheet or board material 17.
34.- Method according to numbered paragraph 33, characterized in that said recesses 44-45 are at least partially provided during the manufacturing of said slab, sheet or board material 17 by means of embossing and/or pressing and/or extruding.
35.- Method according to numbered paragraph 33 or 34, characterized in that said recesses 44-45 are at least partially provided by milling and/or sawing.
36.- Method according to any of numbered paragraphs 32 to 35, characterized in that said recesses 44-45 are available prior to said step S2-S7 of providing one or more lowered areas 6A in said slab, sheet or board material 17.
37.- Method for manufacturing a decorative panel 1, whether or not in accordance with any of the preceding numbered paragraphs, characterized in that said method comprises:
   - the step S1 of providing a slab, sheet or board material 17 comprising a substrate 7 and an applied thereon top layer comprising at least a printed pattern 8 and a transparent layer 9 applied on said printed pattern 8;
   - the step S7 of providing one or more lowered areas 6A in said slab, sheet or board material 17;
   - the step of further processing, preferably dividing, said slab, sheet or board material 17 into one or more of said decorative panels 1, wherein at least a portion of said one or more lowered areas 6A forms a lower edge area 6 at one or both edges of a pair of opposite edges 2-5 of said decorative panels 1;
   characterized in that
   - said step S7 of providing said one or more lowered areas 6A in said slab, sheet or board material 17 is executed using an embossing roller 48-50 at a temperature of 130°C or above, preferably less than 200°C, preferably about 170°C, wherein preferably the surface 10 of said slab, sheet or board material 17 has been preheated; and/or
   - said slab, sheet or board material 17 is provided in a continuous form, wherein said step of further processing comprises cutting said slab, sheet or board material 17 transversally as the first operation after said step S7 of providing said lowered areas 6A and/or within 10 m from provision of said lowered areas 6A and/or at a temperature of 100°C or more, preferably 200°C or more, e.g. at about 240 to 250°C.
38.- Method according to numbered paragraph 37, characterized in that said transparent layer 9 is at least partially coated preferably prior to said step S7 of providing said one or more lowered areas 6A.
39.- Method according to numbered paragraph 37 or 38, characterized in that said embossing roller 48-50 is used together with a counter pressure roller 49-51, wherein said counter pressure roller 49-51 preferably has a rubber or a synthetic or a steel peripheral surface 56.
40.- Method according to any of numbered paragraphs 37 to 39, characterized in that during said step S7 of providing said one or more lowered areas 6A, said slab, sheet or board material 17 follows the circumference of said embossing roller 48-50 over an arc shaped section 66 thereof and said arc shaped section 66 encloses an angle A that lies within a range of 0° to 90°.
41.- Method according to any of numbered paragraphs 37 to 40, characterized in that said transparent layer 9 comprises excavations 47 and that said excavations 47 are at least partially provided by said embossing roller 48 or by an additional embossing roller 50.
42.- Method for manufacturing a decorative panel 1, whether or not in accordance with any of the preceding numbered paragraphs, characterized in that said method comprises:
   - the step S1 of providing a slab, sheet or board material 17 comprising a substrate 7 and an applied thereon top layer comprising at least a printed pattern 8 and a transparent layer 9 applied on said printed pattern 8, wherein the transparent layer 9 is provided with excavations 47;
   - the step S8 of applying an additional component 55 in a plurality of said excavations 47;
   - the step S2 of providing one or more lowered areas 6A in said slab, sheet or board material 17;
   - the step of further processing, preferably dividing, said slab, sheet or board material 17 into one or more of said decorative panels 1, wherein at least a portion of said one or more lowered areas 6A forms a lower edge area 6 at one or both edges of a pair of opposite edges 2-5 of said decorative panels 1;
   characterized in that
   - said step S8 of applying an additional component 55 in a plurality of said excavations 47 is at least partially executed prior to said step S2 of providing said lowered areas 6A in said slab, sheet or board material 17.
43.- Method according to numbered paragraph 42, characterized in that said printed pattern 8 comprises at least a motif corresponding to at least one decorative panel 1.
44.- Method according to numbered paragraph 42 or 43, characterized in that said step S8 of applying an additional component 55 in a plurality of said excavations 47 is at least partially performed by at least an application device 70 and/or scrapers and/or by means of polishing and/or wiping said upper surface, wherein preferably said application device 70 comprises one or more application rollers 73.
45.- Method according to any of numbered paragraphs 42 to 44, characterized in that after applying the additional component 55 in a plurality of said excavations 47, at least some additional component 55 is removed by a removal roller 75 and/or by brushing and/or grinding.
46.- Method according to any of numbered paragraphs 42 to 45, characterized in that the method further comprises the step of controlling the amount of additional component 55 that is applied on said decorative panel 1, and where said step of controlling is preferably performed by an application device 70.
47.- Method according to numbered paragraph 46, characterized in that said application device 70 comprises a doctor roller 72 and an application roller 73 and in that said amount of additional component 55 that is applied on said decorative panel 1 is controlled by varying the distance between said doctor roller 72 and said application roller 73 and/or by varying the rotational speed of said doctor roller 72 and/or said application roller 73.
48.- Method according to any of the numbered paragraphs 42 to 46, characterized in that the step S8 of applying an additional component 55 in a plurality of said excavations 47 is performed by digitally printing said additional component 55 in register with said excavations 47.
49.- Method according to any of numbered paragraphs 42 to 48, characterized in that the step S7 of providing one or more lowered areas 6A in said slab, sheet or board material 17 is executed by means of an embossing roller 48-50.
50.- Method according to numbered paragraph 49, characterized in that a counter pressure roller 49-51, preferably having a rubber or a synthetic rubber or a steel peripheral surface 56, is used together with the embossing roller 48-50.
51.- Method according to numbered paragraph 49 or 50, characterized in that said embossing roller 48-50 has a circumference comprising at least one protrusion 53 that corresponds to the location of at least one of said lowered areas 6A.
52.- Method according to numbered paragraph 51, characterized in that said protrusion 53 extends further from an adjacent portion 60 of said circumference than the depth of said lowered area 6A.
53.- Method according to any of numbered paragraphs 42 to 48, characterized in that the step S2 of providing one or more lowered areas 6A in said slab, sheet or board is executed by means of a discontinuous or continuous cold press 23.
54.- Method according to any of numbered paragraphs 42 to 48, characterized in that the step S2 of providing one or more lowered areas 6A in said slab, sheet or board is executed by means of a discontinuous or continuous hot press 23.
55.- Method according to numbered paragraph 53 or 54, characterized in that said press 23 comprises a mold portion 22, wherein said mold portion 22 has a global surface 56 comprising at least one protrusion 57 and wherein said protrusion 57 contacts said slab, sheet or board material 17 during the press operation, and in that said protrusion 57 corresponds to the location of at least one of said lowered areas 6A.
56.- Method according to numbered paragraph 55, characterized in that said protrusion 57 extends further from an adjacent portion of said global surface 56 of said mold portion 22 than the depth of said lowered areas 6A.
57.- Method according to any of numbered paragraphs 42 to 55, characterized in that the step of providing one or more lowered areas 6A in said slab, sheet or board is executed at least partially by milling said lowered area 6A into said slab, sheet or board material 17.
58.- Method according to any of numbered paragraphs 42 to 57, characterized in that the method further comprises the step of applying a topcoat and/or a primer over said additional component 55.
59.- Method according to numbered paragraph 58, characterized in that the method further comprises the step of curing the primer and/or topcoat by means of radiation and/or heat.
60.- Method according to numbered paragraphs 42 to 59, characterized in that said additional component 55 comprises a lacquer, a paint or the like.
61.- Method according to any of numbered paragraphs 42 to 60, characterized in that said additional component 55 comprises a powder.
62.- Method according to any of numbered paragraphs 42 to 61, characterized in that the method further comprises the step of at least partially curing the additional component 55 by means of radiation and/or heat.
63.- Method according to numbered paragraph 62, characterized in that said partial curing of said additional component 55 is performed at least partially prior to the step S2 of providing one or more lowered areas 6A in said slab, sheet or board material 17.
64.- Method according to numbered paragraph 63, characterized in that said partially cured additional component 55 is fully cured during and/or after the step S2 of providing one or more lowered areas 6A in said slab, sheet or board material 17.
65.- Method according to any of numbered paragraphs 62 to 64, characterized in that the step of at least partially curing the additional component 55 by means of heat is realized by a pressing and/or embossing operation.
66.- Method for manufacturing a decorative panel 1, whether or not in accordance with any of the preceding numbered paragraphs, characterized in that said method comprises:
   - the step S1 of providing a slab, sheet or board material 17 comprising a substrate 7 and an applied thereon top layer comprising at least a printed pattern 8 and a transparent layer 9 applied on said printed pattern 8, wherein the transparent layer 9 is provided with excavations 47;
   - the step S7 of providing one or more lowered areas 6A in said slab, sheet or board material 17;
   - the step S8 of applying an additional component 55 in a plurality of said excavations 47;
   - the step of further processing, preferably dividing, said slab, sheet or board material 17 into one or more of said decorative panels 1, wherein at least a portion of said one or more lowered areas 6A forms a lower edge area 6 at one or both edges of a pair of opposite edges 2-5 of said decorative panels 1;
   characterized in that
   - said step S8 of applying an additional component 55 in a plurality of said excavations 47 is at least partially executed after said step S7 of providing said lowered areas 6A in said slab, sheet or board material 17, wherein a device is used for applying said additional component 55, wherein said device applies said additional component 55 in an equal or lesser manner in said lowered area 6A.
67.- Method according to numbered paragraph 66, characterized in that said device comprises at least one application roller 73 and wherein said application roller 73 has an outer surface 74 comprising at least one protrusion 78.
68- Method according to numbered paragraph 67, characterized in that said one or more protrusions 78 extend outward from an adjacent portion 80 of said outer surface over a distance D8 between 0 mm and 1 mm.
69.- Method according to numbered paragraphs 67 or 68, characterized in that the position of said one or more protrusions 78 corresponds to at least the location of said lowered areas 6A.
70.- Method according to any of the numbered paragraphs 67 to 69, characterized in that said protrusion 78 comprises a lateral side portion 81 that has an inclination A2 with respect to an adjacent portion 80 of the outer surface 74 of said application roller 73, wherein said inclination A2 is between 90° and 180°
71.- Method according to any of the numbered paragraphs 67 to 70, characterized in that said one or more protrusions 78 have a hardness that is equally as hard or preferably harder than the hardness of said adjacent portions 80 of said outer surface 74 of said application roller 73.
72.- Method according to any of numbered paragraphs 66 to 71, characterized in that said device 70 comprises multiple active coating surfaces 79 rotating around the same axis, separated by a distance that is preferably at least equal to or larger than the width of said lowered area 6A.
73.- Method according to any of numbered paragraphs 66 to 72, characterized in that the method comprises the step where at least some additional component 55 is removed by a roller 75 and/or by scraping and/or grinding.
74.- Method according to any of numbered paragraphs 66 to 73, characterized in that said device 70 comprises at least two rollers 72-73 and the additional component 55 is fed to the device into the nip 71 between said rollers.
75.- Method according to numbered paragraph 74, characterized in that said nip 71 is separated into multiple separated nips 71 by at least one removable part 82 and where each nip 71 is fed with said additional component 55.
76.- Method according to numbered paragraph 75, characterized in that said one or more removable parts 82 directly contact at least one of said rollers 72-73 and the width of said one or more removable parts 82 is equal to or greater than the width of the lowered area 6A.
77.- Method for manufacturing a decorative panel 1, whether or not in accordance with any of the preceding numbered paragraphs, characterized in that said method comprises:
   - the step S1 of providing a slab, sheet or board material 17 comprising a substrate 7 and an applied thereon top layer comprising at least a printed pattern 8 and a transparent layer 9 applied on said printed pattern 8, wherein the transparent layer 9 is provided with excavations 47;
   - the step S8 of applying an additional component 55 in a plurality of said excavations 47;
   - the step of further processing, preferably dividing, said slab, sheet or board material 17 into one or more of said decorative panels 1;
   characterized in that
   - said step S8 of applying an additional component 55 in a plurality of said excavations 47 is at least partially executed by digitally applying said additional component 55.
78.- Method according to numbered paragraph 77, characterized in that said additional component 55 is at least partially applied through the use of inkjet printing.
79.- Method according to numbered paragraphs 77 or 78, characterized in that said printed pattern 8 is at least partially applied by digital printing.
80. Method according to any of numbered paragraphs 77 to 79, characterized in that said excavations 47 are at least partially provided through a digital method.
81.- Method according to any of numbered paragraphs 77 to 80, characterized in that said excavations 47 are in register with said printed pattern 8.
82.- Method according to any of numbered paragraphs 77 to 81, characterized in that said additional component 55 is curable by means of radiation and/or heat, for example UV-curable.
83.- Method according to any of numbered paragraphs 77 to 82, characterized in that said transparent layer 9 is of a similar chemical buildup as said additional component 55, preferably said transparent layer 9 and said additional component 55 are both acrylic based.
84.- Decorative panel 1 obtained through a method having the characteristics of any of the preceding numbered paragraphs.
85- Decorative panel 1 having a substrate 7 and an applied thereon top layer comprising at least a printed pattern 8 and a transparent layer 9 applied on said printed pattern 8, wherein the transparent layer 9 is provided with excavations 47 and wherein the panel comprises a lower edge area 6 at one or both edges of a pair of opposite edges 2-5, characterized in that a plurality of said excavations 47 is provided with an additional component 55, while at least portions of said lower edge area 6 are free of said additional component 55 or only covered by a residual film of said additional component 55.
86.- Decorative panel 1 according to numbered paragraph 85, characterized in that said printed pattern 8 extends continuously from the global upper surface of said decorative panel 1 towards and over at least a portion of said lower edge area 6.
87.- Decorative panel 1 according to numbered paragraph 85 or 86, characterized in that said additional component 55 is mainly available in said excavations 47, and is, preferably, absent from the areas between said excavations 47.
88.- Decorative panel 1 according to any of numbered paragraphs 85 to 87, characterized in that said lower edge area 6 comprises local excavations 47, wherein a plurality of said local excavations 47 are also provided with said additional component 55.
89.- Decorative panel 1 according to any of numbered paragraphs 85 to 88, characterized in that said additional component 55 is an opacifying component.
90.- Decorative panel 1 according to numbered paragraph 89, wherein said additional component 55 is a coloring agent, such as a dye or an ink.
91.- Decorative panel 1 according to any of numbered paragraphs 85 to 90, characterized in that said substrate 7 comprises at least one or more of the materials in the list consisting of polyvinyl chloride, polypropylene, polyethylene, polyurethane, polylactic acid, polyethylene terephthalate, wood fiberboard such as medium density fiberboard or high density fiberboard.
92.- Decorative panel 1 according to any of numbered paragraphs 85 to 91, characterized in that said substrate 7 comprises a thermoplastic material.
93.- Decorative panel 1 according to numbered paragraph 92, characterized in that said substrate 7 comprises filler material.
94.- Decorative panel 1 according to numbered paragraph 93, characterized in that said filler material comprises CaCO3 and/or wood fiber and/or sand and/or talc and/or limestone and the like.
95.- Decorative panel 1 according to any of numbered paragraphs 92 to 94, characterized in that said substrate 7 is free of plasticizers or comprises 5 or less phr plasticizer.
96- Decorative panel 1 according to any of numbered paragraphs 85 to 95 characterized in that said plurality of excavations 47 each have a maximum depth that ranges between 20 and 500 micron and wherein said depth varies along a cross section of the decorative panel 1.
97.- Decorative panel 1 according to any of numbered paragraphs 85 to 96, characterized in that said printed pattern 8 is provided on a carrier sheet.
98.- Decorative panel 1 according to numbered paragraph 97, characterized in that said carrier sheet comprises a thermoplastic material.
99.- Decorative panel 1 according to numbered paragraph 97, characterized in that said carrier sheet comprises a paper.
100.- Decorative panel 1 according to any of numbered paragraphs 85 to 96, characterized in that said printed pattern 8 is directly printed on the substrate 7.
101.- Decorative panel 1 according to any of numbered paragraphs 85 to 100, characterized in that said printed pattern 8 is a digitally printed layer.
102.- Decorative panel 1 according to any of numbered paragraphs 85 to 101, characterized in that said transparent layer 9 comprises a thermoplastic material.
103.- Decorative panel 1 according to any of numbered paragraphs 85 to 102, characterized in that said transparent layer 9 comprises a lacquer and/or a coating.
104.- Decorative panel 1 according to any of numbered paragraphs 85 to 103, characterized in that on at least one pair of opposite edges 2-5, said decorative panel 1 comprises coupling parts 13, said coupling parts 13 enabling a mechanical locking between two of such decorative panels 1.
105.- Decorative panel 1 according to numbered paragraph 104, characterized in that the substrate 7 comprises a locally stressed zone 61 and wherein said locally stressed zone 61 comprises at least a region of the coupling parts 13 that is not critical to the overall strength of said mechanical locking system between said decorative panels 1.
106.- Decorative panel 1 according to any of the numbered paragraphs 85 to 105, characterized in that said residual film of additional component 55 has a thickness between 0 and 50 µm.
107.- Decorative panel 1 having a substrate 7 and an applied thereon top layer comprising at least a printed pattern 8 and a transparent layer 9 applied on said printed pattern 8, wherein said substrate 7 is a filled synthetic material and the panel comprises a lower edge area 6 at one or both edges of a pair of opposite edges 2-5, wherein said pair of opposite edges 2-5 is provided with mechanical coupling means 13 allowing two of such panels 1 to become locked to each other at the respective edges 2-5 in a vertical direction perpendicular to the plane of the coupled panels 1 and in a horizontal direction perpendicular to said edges and in the plane of the coupled panels 1, wherein said coupling means 13 are basically shaped as a tongue comprising a portion 63 that protrudes from the respective edge and a groove being bordered by an upper lip 65 and a lower lip 64, characterized in that said substrate 7 at one or more of said edges 2-5 comprises locally stressed zones 61, wherein said stressed zones 61 are available in said protruding portion 63 of said tongue and/or in said lower lip 64 of said groove and/or in said upper lip 65 of said groove.
108.- Decorative panel 1 according to numbered paragraph 107, characterized in that said locally stressed zones 61 are preferably mainly available in said protruding portion 63 of said tongue and/or in said lower lip 64 of said groove and/or in said upper lip 65 of said groove.
109.- Decorative panel 1 according to numbered paragraph 107 or 108, characterized in that said locally stressed zones 61 are preferably absent from parts of said mechanical coupling means 13 that are critical to the overall coupling tension of said mechanical coupling.
110.- Decorative panel 1 according to any of the numbered paragraphs 107 to 109, characterized in that said locally stressed zones 61 impact as little material as possible.
111.- Decorative panel 1 according to any of the numbered paragraphs 107 to 110, characterized in that said locally stressed zones 61 are located at a distance D7 between 0,1 and 1 mm from the thinnest section 62 of said lower lip 64 of said groove.
112.- Method for manufacturing a decorative panel, wherein said method comprises at least:
   - the step S1 of providing a slab, sheet or board material 17 comprising a substrate 7 and an applied thereon top layer comprising at least a printed pattern 8 and a transparent layer 9 applied on said printed pattern 8;
   - the step S2 of providing one or more lowered areas 6A in said slab, sheet or board material 17;
   - the step of further processing, preferably at least dividing, said slab, sheet or board material 17 into one or more of said decorative panels 1, wherein at least a portion of said one or more lowered areas 6A forms a lower edge area 6 at one or both edges 2-3 of a pair of opposite edges of said decorative panels 1;
   characterized in that
   said step of providing one or more lowered areas 6A in said slab, sheet or board material 17 at least comprises a, preferably discontinuous, pressing operation by means of a press 23 having a pressing mold 22, wherein said pressing mold 22 comprises at least a first protrusion 57 on that portion of the molds surface that contacts said slab, sheet or board material 17 during the press operation, wherein said first protrusion 57 corresponds at least to the location of at least one of said lowered areas 6A, wherein said pressing mold 22 comprises at least a second protrusion 84 extending generally parallel to said first protrusion 57, wherein said second protrusion 84 contacts said slab, sheet or board material 17 during the press operation and corresponds to a portion of said slab, sheet or board material 17 that is removed in said step of further processing.
113.- Method according to numbered paragraph 112, characterized in that said slab, sheet or board material 17 comprises the material for a plurality of decorative panels (1), wherein at least one of said decorative panels 1 is distanced from an edge of said slab, sheet or board material 1) only by a side portion 85 that is removed in said step of further processing, wherein said second protrusion 84 corresponds to a portion within said side portion 85, and said at least one lowered area 6A corresponding to said first protrusion 57 forms the proximal demarcation of said side portion 85.
114.- Pressing mold 22 for use in a method in accordance with numbered paragraph 112 or 113, characterized in that said pressing mold 22 comprises said first protrusion 57 and said second protrusion 84.
115.- Pressing mold 22 according to numbered paragraph 114, characterized in that said first protrusion 57 and said second protrusion 84 have the same height or wherein the difference in height between said first protrusion 57 and said second protrusion 84 is less than 15% of the height of the highest of the first protrusion (84) and the second protrusion 84.
116.- Pressing mold 22 according to numbered paragraph 114 or 115, characterized in that the cross-section of said first protrusion 57 and said second protrusion 84 are identical, or essentially identical.

The present invention is not limited to the preferred embodiments described here above, but such panels, pressing molds and methods may be realized according to several variants without leaving the scope of the invention.

## Claims

1. Method for manufacturing a decorative panel, wherein said method comprises at least:
- the step (S1) of providing a slab, sheet or board material (17) comprising a substrate (7) and an applied thereon top layer comprising at least a printed pattern (8) and a transparent layer (9) applied on said printed pattern (8);
- the step (S2) of providing one or more lowered areas (6A) in said slab, sheet or board material (17); wherein said slab, sheet or board material (17) is optionally heated before said step (S2) of providing said lowered areas (6A) to a temperature between 25°C and 110°C;
- the step of further processing, preferably at least dividing, said slab, sheet or board material (17) into one or more of said decorative panels (1), wherein at least a portion of said one or more lowered areas (6A) forms a lower edge area (6) at one or both edges (2-3) of a pair of opposite edges of said decorative panels (1);
**characterized in that**
said step of providing one or more lowered areas (6A) in said slab, sheet or board material (17) at least comprises a, preferably discontinuous, pressing operation by means of a press (23) having a pressing mold (22), wherein prior to and/or subsequent to and/or during said pressing operation at least one reference edge (19-21) is machined at least to said substrate (7), wherein said reference edge (19-21) is at a predefined distance (D1-D2) from and preferably parallel to at least one edge or at least one upper edge (11) of said pair of opposite edges (2-3).

2. Method according to claim 1, **characterized in that** said step (S1) of providing said slab, sheet or board material (17) comprises firstly providing a material in an endless format and transversally cutting at least said substrate (7) from said material, for example by means of a punch, guillotine or flying saw.

3. Method according to claim 2, **characterized in that** said material at least comprises said substrate (7) and said top layer.

4. Method according to claim 2 or 3, **characterized in that** said material is provided at least by extrusion, and preferably, subsequently providing said top layer on the extruded material, for example by means of thermal lamination of one or more prefabricated sheets, e.g. a printed decorative foil (12) and a transparent foil, or for example by providing the printed pattern on said extruded material by directly applying inks on said extruded material, possibly with the intermediate of one or more primer layers, and/or one or more transparent layers are provided on said printed pattern by liquidly applying a lacquer or polymeric substance.

5. Method according to any of the preceding claims, **characterized in that** said slab, sheet or board material (17) is provided with at least a first edge that has been straightened by machining.

6. Method according to claim 5, **characterized in that** said at least one straightened edge forms a first reference edge (19), and is for example used for aligning said slab, sheet or board material (17) to said pressing mold.

7. Method according to claim 6, **characterized in that** said slab, sheet or board material (17) is driven into said press (23) by means of a cart and/or grippers (24), wherein said slab, sheet or board material (17) is delivered into said press (23) with said first reference edge (19) at a predefined position (P), for example with an accuracy allowing a tolerance of 0.25 mm or less.

8. Method according to any of claims 5 to 7, **characterized in that** said slab, sheet or board material (17) is provided with at least a second edge (21) that has been straightened by machining, wherein said second edge is perpendicular to said first edge.

9. Method according to claim 8, **characterized in that** said second straightened edge is provided in a device (25) where said first straightened edge is used as a reference.

10. Method according to claim 8 or 9, **characterized in that** said second straightened edge is provided while said slab, board or sheet material (17) is being delivered in said press, while said slab is in said press (23), and/or while said slab, sheet or board material (17) is exiting said press (23).

11. Method according to any of the preceding claims, **characterized in that** said one or more reference edges (19-21) are used as a reference in said dividing said slab, sheet or board material. Preferably, said slab, sheet or board material (17) is divided into panels having approximately the desired dimensions of the decorative panels (1).

12. Method according to any of the preceding claims, **characterized in that** said one or more reference edges (19-21) are used as a reference in said further processing.

13. Method according to any of the preceding claims, **characterized in that** said method further comprises the step of providing said transparent layer (9) with excavations, wherein this step is preferably at least partially executed separately from, preferably prior to said step (S2) of providing said lowered areas (6A) in said slab, sheet or board material (17).

14. Method according to any of the preceding claims, **characterized in that** said substrate (7) comprises a filled synthetic composite material, preferably the synthetic material is a thermoplastic material, such as polyvinyl chloride, and the filler material may be calcium carbonate, talcum, coal.

15. Method according to any of the preceding claims, **characterized in that** said pressing mold (22) comprises at least a first protrusion (57) on that portion of the molds surface that contacts said slab, sheet or board material (17) during the press operation, wherein said first protrusion (57) corresponds at least to the location of at least one of said lowered areas (6A), wherein said pressing mold (22) comprises at least a second protrusion (84) extending generally parallel to said first protrusion (84), wherein said second protrusion (84) contacts said slab, sheet or board material (17) during the press operation and corresponds to a portion (85-58) of said slab, sheet or board material (17) that is removed in said step of further processing.
